# EUROPEAN PATENT APPLICATION

(11) **EP 4 712 556 A1**
(43) Date of publication of application: **18.03.2026**
(21) Application number: 23936180.1
(22) Date of filing: 11.05.2023
(51) Int. Cl.: H04W 36/00

(54) **INFORMATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: XIONG, Yi, Beijing 100085 (CN); WU, Yumin, Beijing 100085 (CN)
(74) Representative: Stöckeler, Ferdinand
(86) International application number: PCT/CN2023/093716
(87) International publication number: WO 2024/229867

(57) **Abstract**

Embodiments of the present disclosure provide an information processing method and apparatus, a communication device, and a storage medium. The information processing method is executed by a user equipment (UE), and comprises: in response to executing a first operation associated with a first mobility configuration of a UE, executing a second operation associated with a second mobility configuration of the UE. The second mobility configuration of the UE is reserved, so that the UE can conveniently execute a mobility operation associated with the second mobility configuration, thereby reducing reconfigurations of the second mobility configuration, and reducing the overhead of signaling. After executing a mobility operation associated with the first mobility configuration, the UE deletes the second mobility configuration that is invalid due to first mobility associated with the first mobility configuration, thereby reducing storage space occupied by the invalid second mobility configuration, and reducing the access failure caused by selection of a wrong target cell according to continuous storage of the second mobility configuration being triggered and/or poor quality of communications after the access.

## Description

### TECHNICAL FIELD

The present disclosure relates to, but is not limited to the field of wireless communication technologies, and in particular relates to a method and an apparatus for processing information, a communication device and a storage medium.

### BACKGROUND

In dual-connectivity, multi-connectivity, or carrier aggregation scenarios, a user equipment (UE) may simultaneously access two cells or two cell groups. For example, the UE may simultaneously access a primary cell (PCell) and a secondary cell (SCell), or simultaneously access a master cell group (MCG) and a secondary cell group (SCG). The MCG includes multiple cells. A cell from which the UE initiates an initial access may be the PCell. As the name implies, the PCell is the most important cell in the MCG. Other cells in the MCG except the PCell are SCells. The PCell in the MCG and the SCell in the MCG are combined through carrier aggregation (CA) to increase a transmission rate and meet a rate requirement of a user.

### SUMMARY

Embodiments of the present disclosure provide a method and an apparatus for processing information, a communication device and a storage medium.

According to a first aspect of embodiments of the present disclosure, there is provided a method for processing information, performed by a user equipment (UE), including:
in response to performing a first operation associated with a first mobility configuration of the UE, performing a second operation associated with a second mobility configuration of the UE.

According to a second aspect of embodiments of the present disclosure, there is provided a method for processing information, performed by a network device, including:
in response to a user equipment (UE) being unable to have both a first mobility configuration and a second mobility configuration, sending one of the first mobility configuration and the second mobility configuration to the UE.

According to a third aspect of embodiments of the present disclosure, there is provided a method for processing information, performed by a user equipment (UE), including:
receiving a deleting message and a second mobility configuration, in which the deleting message is sent by the network device in a case where it is determined that the UE is unable to have both a first mobility configuration and the second mobility configuration and the UE already has the first mobility configuration;
deleting, according to the deleting message, the first mobility configuration of the UE; and
storing the second mobility configuration.

According to a fourth aspect of embodiments of the present disclosure, there is provided an apparatus for processing information, including:
a performing module configured to, in response to performing a first operation associated with a first mobility configuration of a user equipment (UE), perform a second operation associated with a second mobility configuration of the UE.

According to a fifth aspect of embodiments of the present disclosure, there is provided an apparatus for processing information, including:
a sending module configured to, in response to a user equipment (UE) being unable to have both a first mobility configuration and a second mobility configuration, send one of the first mobility configuration and the second mobility configuration to the UE.

According to a sixth aspect of embodiments of the present disclosure, there is provided an apparatus for processing information, including:
a receiving module configured to receive a deleting message and a second mobility configuration, in which the deleting message is sent by a network device in a case where it is determined that a user equipment (UE) is unable to have both a first mobility configuration and the second mobility configuration and the UE already has the first mobility configuration;
a deleting module configured to, according to the deleting message, delete a first mobility configuration of the UE ; and
a storing module configured to store the second mobility configuration.

According to a seventh aspect of embodiments of the present disclosure, there is provided a communication device, including a processor, a transceiver, a memory and an executable program stored in the memory and executable by the processor, in which the processor, when running the executable program, performs the method for processing information provided in any of the above embodiments.

According to an eighth aspect of embodiments of the present disclosure, there is provided a computer storage medium storing an executable program, in which the executable program, when executed by a processor, causes the processor to implement the method for processing information provided in any of the above embodiments.

With the method for processing information provided in embodiments of the present disclosure, since the UE has two mobility configurations, that is, the first mobility configuration and the second mobility configuration, after performing the first operation associated with the first mobility configuration, the UE performs the second operation associated with the second mobility configuration of the UE, such as the retaining operation or the deleting operation. Retaining the second mobility configuration with the UE facilitates the UE to perform the second operation associated with the second mobility configuration, reduces a situation of reconfiguring the second mobility configuration, and reduces the overhead of signaling. After the UE performs the first operation associated with the first mobility configuration, the second mobility configuration that is invalid due to the first operation associated with the first mobility configuration is deleted, a storage space occupied by the invalid second mobility configuration is reduced. This also minimizes the occurrence of failed access phenomenon caused by selecting an incorrect target cell due to triggering the continuously stored second mobility configuration, and/or poor communication quality after access.

With the technical solutions provided in the embodiments of the present disclosure, it is to be understood that both the foregoing general description and the following detailed description are illustrative and explanatory only and are not restrictive of the present disclosure, as claimed.

### BRIEF DESCRIPTION OF THE DRAWINGS

The accompanying drawings, which are incorporated in and constitute a part of this specification, illustrate embodiments consistent with the present disclosure and, together with the description, explain the principles of the present disclosure.
FIG. 1 is a schematic diagram illustrating a wireless communication system according to an illustrative embodiment.
FIG. 2 is a schematic diagram illustrating an architecture of a dual connectivity according to an illustrative embodiment.
FIG. 3 is a schematic diagram illustrating an architecture of another dual connectivity according to an illustrative embodiment.
FIG. 4 is a schematic diagram illustrating a master cell group and a secondary cell group according to an illustrative embodiment.
FIG. 5 is a schematic diagram illustrating a conditional handover procedure according to an illustrative embodiment.
FIG. 6 is a schematic diagram illustrating a method for processing information according to an illustrative embodiment.
FIG. 7 is a schematic diagram illustrating another method for processing information according to an illustrative embodiment.
FIG. 8 is a schematic diagram illustrating another method for processing information according to an illustrative embodiment.
FIG. 9 is a schematic diagram illustrating another method for processing information according to an illustrative embodiment.
FIG. 10 is a schematic diagram illustrating another method for processing information according to an illustrative embodiment.
FIG. 11 is a schematic diagram illustrating another method for processing information according to an illustrative embodiment.
FIG. 12 is a schematic diagram illustrating another method for processing information according to an illustrative embodiment.
FIG. 13 is a schematic diagram illustrating another method for processing information according to an illustrative embodiment.
FIG. 14 is a schematic diagram illustrating another method for processing information according to an illustrative embodiment.
FIG. 15 is a schematic diagram illustrating another method for processing information according to an illustrative embodiment.
FIG. 16 is a schematic diagram illustrating another method for processing information according to an illustrative embodiment.
FIG. 17 is a schematic diagram illustrating another method for processing information according to an illustrative embodiment.
FIG. 18 is a schematic diagram illustrating another method for processing information according to an illustrative embodiment.
FIG. 19 is a schematic diagram illustrating another method for processing information according to an illustrative embodiment.
FIG. 20 is a schematic diagram illustrating another method for processing information according to an illustrative embodiment.
FIG. 21 is a schematic diagram illustrating another method for processing information according to an illustrative embodiment.
FIG. 22 is a schematic diagram illustrating another method for processing information according to an illustrative embodiment.
FIG. 23 is a schematic diagram illustrating another method for processing information according to an illustrative embodiment.
FIG. 24 is a schematic diagram illustrating another method for processing information according to an illustrative embodiment.
FIG. 25 is a schematic diagram illustrating an apparatus for processing information according to an illustrative embodiment.
FIG. 26 is a schematic diagram illustrating another apparatus for processing information according to an illustrative embodiment.
FIG. 27 is a schematic diagram illustrating another apparatus for processing information according to an illustrative embodiment.
FIG. 28 is a block diagram illustrating a UE according to an illustrative embodiment.
FIG. 29 is a block diagram illustrating a communication device according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to embodiments of the present disclosure.

Terms used herein in embodiments of the present disclosure are only for the purpose of describing specific embodiments, but should not be construed to limit the embodiments of the present disclosure. As used in the embodiments of the present disclosure, "a/an", "said" and "the" in singular forms are intended to include plural forms, unless clearly indicated in the context otherwise. It should also be understood that the term "and/or" used herein represents and contains any or all possible combinations of one or more associated listed items.

Although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of the embodiments of the present disclosure. As used herein, the term "if" may be construed to mean "when" or "upon" or "in response to determining" depending on the context.

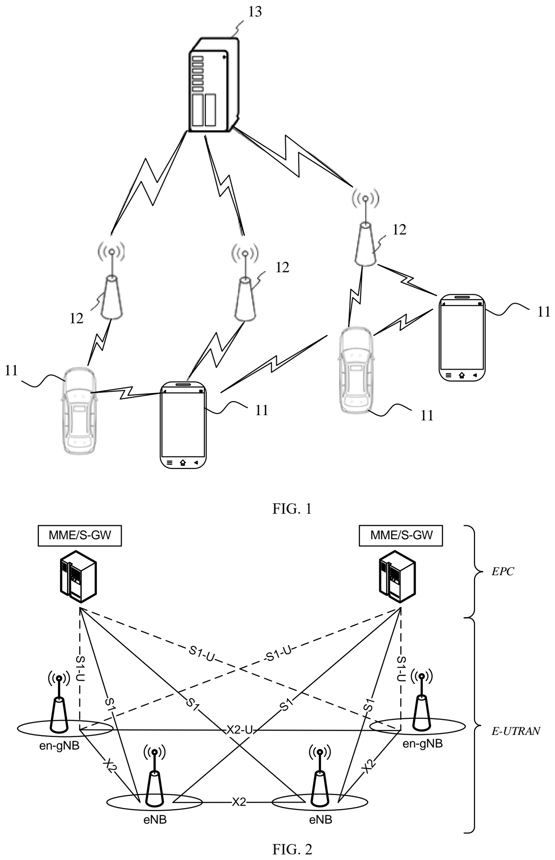

Reference is made to FIG. 1, which is a schematic diagram showing a wireless communication system provided in an embodiment of the present disclosure. As shown in FIG. 1, the wireless communication system is a communication system based on the cellular mobile communication technology, and may include at least one UE 11, and several access devices 12 and/or several core network devices 13.

The UE 11 may be a device that provides voice and/or data connectivity to a user. The UE 11 may communicate with one or more core networks via a radio access network (RAN). The UE 11 may be an Internet of Things terminal, such as a sensor device, a mobile phone (or referred to as a "cellular" phone) and a computer with an Internet of Things terminal. For example, the UE 11 may be a fixed, portable, pocket-sized, handheld, computer built-in or vehicle-mounted apparatus. For example, the UE 11 may be a station (STA), a subscriber unit, a subscriber station, a mobile station, a mobile, a remote station, an access point, a remote terminal, an access terminal, a user terminal, a user agent, a user device, or a user equipment (UE). Alternatively, the UE 11 may also be a device of an unmanned aerial vehicle. Alternatively, the UE 11 may also be a vehicle-mounted device, for example, a driving computer with a wireless communication function, or a wireless communication device externally connected with a driving computer. Alternatively, the UE 11 may be a roadside device, such as a street lamp, a signal lamp or other roadside devices with a wireless communication function.

The access device 12 may be a network device in the wireless communication system. The wireless communication system may be a 4th generation mobile communication (4G) system, also referred to as a long-term evolution (LTE) system. Alternatively, the wireless communication system may also be a 5G system, also referred to as a new radio (NR) system or a 5G NR system. Alternatively, the wireless communication system may also be a next generation system of the 5G system. The access network in the 5G system may be referred to as a new generation-radio access network (NG-RAN), or a machine-type communication (MTC) system.

The access device 12 may be an evolved access device (eNB) used in the 4G system. Alternatively, the access device 12 may also be an access device (gNB) of a centralized distributed architecture in the 5G system. When the access device adopts the centralized distributed architecture, it usually includes a central unit (CU) and at least two distributed units (DUs). A protocol stack of a packet data convergence protocol (PDCP) layer, a radio link control (RLC) layer and a media access control (MAC) layer is provided in the central unit. A protocol stack of a physical (PHY) layer is provided in the distributed unit. The specific implementation of the access device is not limited in the embodiments of the present disclosure.

A wireless connection may be established between the access device 12 and the UE 11 via a radio interface. In different embodiments, the radio interface is a radio interface based on the 4th generation mobile communication network technology (4G) standard. Alternatively, the radio interface is a radio interface based on the 5th generation mobile communication network technology (5G) standard. For example, the radio interface is a new radio. Alternatively, the radio interface may also be a radio interface based on the next generation mobile communication network technology standard of the 5G.

For example, the technical solution provided in the present disclosure may be applied to communication systems using dual-connectivity technology, which includes the following types.

A first type is multi-radio dual connectivity (MR-DC).

The MR-DC is a generalized universal mobile telecommunication system (UMTS) evolved universal terrestrial radio access (Intra-E-UTRA) dual connection. The UE may utilize radio resources provided by two different resource scheduling units located on two different new generation radio access network (NG-RAN) nodes, one providing a new radio (NR) access and the other providing an E-UTRA or NR access through a non-ideal backhaul connection. The base station of the primary cell may be a master node (MN), and the base station of the secondary cell may be a secondary node (SN). The MN and the SN are connected through a network interface, and at least the MN is connected to the core network.

A second type is MR-DC based on an evolved packet core (EPC).

Reference is made to FIG. 2, which is a schematic diagram illustrating an architecture of an E-UTRA-NR dual connectivity (EN-DC). The E-UTRAN supports the MR-DC through the EN-DC, in which the UE is connected to a base station eNB acting as an MN and to a base station en-gNB acting as an SN. The base station eNB is connected to the EPC through an S1 interface and to the base station en-gNB through an X2 interface. The base station en-gNB may also be connected to the EPC through an S1-U interface, and may also be connected to other base station en-gNBs through an X2-U interface. The core network device of the EPC may include a mobility management entity (MME) and/or a service-gateway (S-GW).

A third type is MR-DC of a 5th generation core (5GC).

The 5GC supports the following dual connections.

### 1) Dual connectivity of the E-UTRA-NR and the NGEN-DC

The 5G NG-RAN supports the NG-RAN E-UTRA-NR dual connectivity (NGEN-DC), in which a UE is connected to an ng-eNB as the MN and to a gNB as the SN. The base station ng-eNB is connected to the 5GC, and the base station gNB is connected to the base station ng-eNB through an Xn interface.

### 2) Dual connectivity of NR-E-UTRA

The NG-RAN supports the NR-E-UTRA dual connectivity (NE-DC), in which the UE is connected to the base station gNB serving as the MN and to the base station ng-eNB serving as the SN. The base station gNB is connected to the 5GC, and the base station ng-eNB is connected to the base station gNB through the Xn interface.

### 3) A dual connection of NR-NR

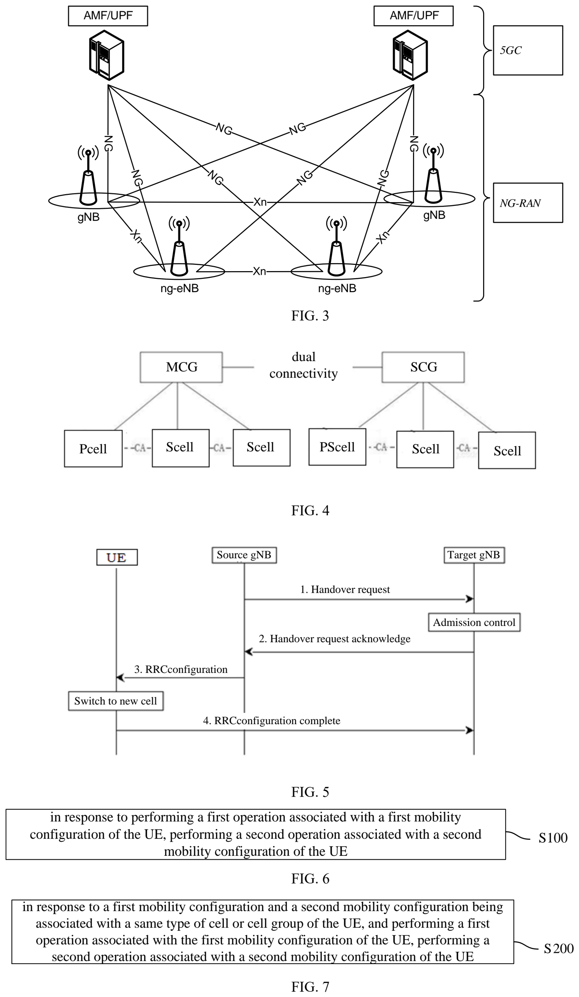

Reference is made to FIG. 3, which is a schematic diagram illustrating an architecture of an NR-DC. The NG-RAN supports NR-NR dual connectivity (NR-DC), in which the UE is connected to one base station gNB serving as the MN and to another base station gNB serving as the SN. A primary base station gNB is connected to the 5GC through an NG interface, two base stations gNBs are connected through an Xn interface, and a secondary base station gNB may also be connected to the 5GC through an NG-U interface. Furthermore, the NR-DC may also be used for the UE to access a single base station gNB, and the base station gNB serves as both the MN and the SN, and simultaneously configures a master cell group (MCG) and a secondary cell group (SCG).

The following provides relevant explanations or descriptions of terms referred to in the present disclosure.

A mobility operation includes various operations related to serving cell updates (or changes) of the UE, for example, an operation of changing a primary cell of the UE, an operation of changing the MCG of the UE, an operation of changing a secondary cell of the UE, and/or an operation of changing the SCG of the UE.

The primary cell (Pcell) may be a cell to which the UE initiates an initial access.

The MCG may be a cell group including the Pcell. It is worth noting that the MCG may also include one or more secondary cells.

The secondary cell (Scell) may be a cell other than the Pcell. The secondary cell may be divided into a primary secondary cell (PScell), which is a relatively important cell in the Scell.

The SCG includes one PScell, and may also include one or more Scells.

Typically, much of the UE's control signalings is transmitted only on the Pcell or the PScell.

A special (primary) cell (sPcell) includes the Pcell and/or the PScell.

Reference is made to FIG. 4, which is a schematic diagram illustrating an MCG and an SCG. In a case where a UE supports dual connectivity, multi-connectivity or carrier aggregation, a serving cell of the UE may include the Pcell and the Scell. A serving cell group of the UE may include the MCG and the SCG.

The UE supports both the MCG and the SCG through the dual connectivity. The UE supports both the PCell and the SCell of the MCG through the CA. Similarly, the UE supports both the PSCell and the SCell of the SCG through the CA.

In an embodiment, in the 5th generation (5G) mobile communication system, a UE may perform a mobility operation based on a network preconfigured condition and a preconfigured cell or a preconfigured cell group corresponding to the condition. In a case where the UE satisfies a preconfigured condition (e.g., a specific measurement event), the UE changes the serving cell or the serving cell group to the preconfigured cell or the preconfigured cell group.

A mobility configuration of a cell includes a layer 3 (L3) mobility configuration. The L3 mobility configuration may include mobility configuration information based on condition triggering of the L3 and/or mobility configuration information based on an L3 instruction.

The L3 mobility configuration may also be configuration information for a mobility operation of the UE. However, in general, the configuration information may include a trigger condition that triggers the UE to perform the mobility operation, also known as an L3 condition-triggered mobility configuration.

The L3 condition-triggered mobility configuration may include:
a configuration ID, which may be used to identify corresponding configuration information;
information of the trigger condition, which may include a condition for the UE to activate or deactivate a configuration of a cell or a cell group; and
the configuration of the cell and the cell group, which may include radio resource control (RRC) reconfiguration information and the like. For example, the RRC reconfiguration information may be used at least for the UE to access the cell or the cell group.

After performing cell switch or cell group selective activation, the UE may also continue to retain the original layer 1 or layer 2-triggered mobility (LTM) configuration or the L3 condition-triggered mobility configuration of a candidate cell or a candidate cell group.

A L3 condition-triggered mobility procedure may include:
a conditional handover (CHO);
a conditional PSCell addition (CPA); and
a conditional PSCell change (CPC).

### Selective activation of cell groups

The selective activation of cell groups may include one or more of the selective activation of cell groups for the MCG and the selective activation of cell groups for the SCG.

The UE may also change a configuration of a special cell or a special cell group upon satisfying a preconfiguration condition, as indicated by a network. For example, a PCell configuration of the UE is changed from a configuration-1 of a candidate cell or a candidate cell group to a configuration-2 of the candidate cell or the candidate cell group. The candidate cell is a candidate cell available for the UE access as a serving cell of the UE. The candidate cell group may be a candidate cell group available for the UE access as serving cells of the UE.

Reference is made to FIG. 5, which is a schematic diagram illustrating a CHO procedure.

The handover procedure includes:
1) A source gNB initiates a handover and issues a handover request through an Xn interface.
2) A target gNB performs a grant control, and provides a new RRCconfiguration to the source gNB. The RRC configuration is carried in a handover request acknowledgement and returned to the source gNB, and the RRCconfiguration may be used for the UE to access a target cell corresponding to the target gNB.
3) The source gNB forwards a handover request response to the UE. For example, the source base station sends the RRCconfiguration provided by the target base station to the UE through an RRCReconfiguration message. The RRCconfiguration includes at least a cell ID of the target cell and an RRC configuration required for accessing the target cell, such that the UE may access the target cell without reading system information of the target cell. In some cases, information required for contention-based and non-contention-based random access may be included in the RRCconfiguration. The access information of the target cell may further include beam information.
4) The UE connects to the target gNB based on the RRCconfiguration, and sends an RRCReconfigurationComplete response message indicating the RRCconfiguration is completed to the target gNB.

However, the UE with CHO, CPC, and/or CPA configuration must delete the CHO, CPC, and/or CPA configuration when completing a random access to a target Pcell or a target PSCell. That is, the UE switches the serving cell to the target Pcell or the target PSCell based on the CHO, CPC or CPA by the random access.

The CHO refers to a cell handover performed by the UE in a case where one or more handover execution conditions are satisfied. The UE starts evaluating an execution condition after receiving a configuration of the CHO, and stops evaluating the execution condition after performing the cell handover. The CHO is suitable for the following conditions.

A CHO configuration includes a CHO candidate cell configuration and an execution condition.

One execution condition may include one or two trigger conditions. For example, CHO events of the CHO configuration may include an A3 event and/or an A5 event.

Before any execution conditions of the CHO are satisfied, the UE receives a handover (HO) (without the CHO configuration) command, and then executes a legacy HO procedure.

A conditional PSCell addition (CPA) refers to an execution condition satisfied in a case where the UE adds the PScell. In a case where the UE receives the CPA configuration, the UE starts an evaluation of satisfying the execution condition, and stops an evaluation of the execution condition in a case where a PScell addition or a PCell change is triggered.

A conditional PSCell change (CPC) refers to an execution condition satisfied in a case where the UE changes the PSCell. In a case where the UE receives the CPC configuration, the UE starts the evaluation of satisfying the execution condition, and stops the evaluation of the execution condition in a case where the PScell addition or the PCell change is triggered. The MN is not supported to participate in the CPC within the SN, nor CPC initiated by the MN or the SN with the SN is not supported.

Therefore, if a network does not reconfigure and re-initialize the CHO, CPC, and/or CPA, the UE will not continue to perform the CHO, CPC, and/or CPA subsequently. This will increase a delay of cell handover or SCG change, and increase the overhead of signaling. Especially in the frequency range (FR) 2 scenario, in a case where a CG is frequently changed, the delay of cell handover or SCG change will be increased, and the overhead of signaling will be increased. The CG includes an MCG and the SCG.

Therefore, selective activation of cell groups in MR-DC has been proposed in a mobility enhancement project. The selective activation of cell groups may also be referred to as cell group activation. Configuration information of the cell group activation may include a configuration ID, a configuration of a cell, or a configuration of a target cell group. Optionally, the configuration information of the cell group activation may further include a trigger condition, and the trigger condition may also be referred to as an execution condition and/or an activation condition.

The configuration ID may be used to identify corresponding configuration information.

The configuration of the cell and the cell group may include RRCreconfiguration information and the like, and may be used at least for the UE to access the cell or the cell group.

For example, the trigger condition may be a condition configured for the UE to activate a cell or cell group configuration. Before the UE activates the cell or cell group configuration, the cell or cell group configuration is in an inactivated state, and the UE does not access the network using the inactivated cell or cell group configuration. After being activated by the UE, the cell or cell group configuration is in an activated state, and the UE accesses the network using the activated cell or cell group configuration. If a current situation of the UE is switched from satisfying the activation condition to not satisfying the activation condition, the UE may deactivate the cell or cell group configuration, and the cell or cell group configuration is switched from the activated state to a deactivated state. The deactivated state is also the inactivated state. For example, the UE determines whether the trigger condition is satisfied by measuring a signal quality of a current serving cell and/or a candidate cell or the like.

In the selective activation of the cell group, a network device may provide the UE with a "cell group to be activated". The UE may then activate or deactivate the "cell group to be activated" without re-providing the cell group configuration.

For example, in the cell group selective activation, after activating a new cell group configuration, the UE does not delete the corresponding cell group selective activation configuration.

For example, in cell group selective activation, subsequent CPC may be continued after SCG change or addition occurs without the RRC reconfiguration.

For example, the cell group selective activation may enable the subsequent configuration to be performed even after the cell group is changed, without the need for the network device to reconfigure or re-initialize the corresponding cell group selective activation configuration. Therefore, in the cell group selective activation, the network device may provide the "cell group to be activated" for the UE, and may subsequently activate or deactivate the "cell group to be activated" without re-providing the cell group configuration.

For example, in the cell group selective activation, the network device may provide a pre-configured candidate target cell group or target cell to the UE. The UE may then activate or deactivate the pre-configured candidate cell and/or cell group according to a configuration (e.g., an activation message) issued by the network device or a corresponding activation event without re-providing the cell group configuration. Alternatively, in the cell group selective activation, after activating a new cell or cell group, applying a new cell configuration or cell group configuration, or accessing a new cell or cell group, the UE does not delete the corresponding cell group selective activation configuration.

The cell group selective activation may also be referred to as the cell group activation. The cell group activation may enable the corresponding configuration information to still be executed after the cell and/or cell group is changed, without the need for the network device to reconfigure or re-initialize the corresponding cell group activation configuration. Therefore, the cell group selective activation may reduce the overhead of signaling and an interruption duration for a cell group change. A configuration of the cell group activation may include the configuration ID and the configuration of the target cell or the configuration of the target cell group. Optionally, the configuration of cell group activation may further include the trigger condition (or the execution condition or the activation condition).

In some embodiments, the cell group selective activation is a mobility management procedure including any mobility management procedure in which by configuring cell group activation configuration, the UE activates or deactivates the corresponding cell or cell group according to a signaling sent by the network device, or according to a criteria specified in a protocol, or by the UE itself, or applies the corresponding cell configuration or cell group configuration, or accesses the cell or cell group.

In some embodiments, the cell group selective activation is a mobility management procedure including a mobility management procedure in which the UE does not delete or release a corresponding part or all the configuration after performing any one of the mobility operation procedures associated with the mobility configuration. Not deleting or releasing the corresponding part or all the configuration may also be referred to as retaining the corresponding part or all the configuration.

In some embodiments, in a case where the trigger condition is not configured, the UE may activate the cell or the cell group based on an activation signaling sent by the network device. In a case where the UE receives a deactivation signaling sent by the network device, the UE deactivates the cell or the cell group.

With the selective activation configuration of the cell group, after the CG is changed, there is no need for the network to reconfigure or re-initialize the corresponding selective activation configuration of the cell group, and the UE may still perform the selective activation configuration of the cell group. This may reduce the overhead of signaling and the interruption duration for the cell group change (CG change).

In the selective activation of the cell group, the network device may configure the UE with the cell group to be activated.

In a selective activation of the SCG, the CPC may be continued after the change or addition of the SCG occurs without the RRCreconfiguration, and the CPC may be included in the selective activation of the SCG.

The selective activation of the cell group may change a serving cell group of the UE, and may continue to be performed according to the selective activation configuration of the cell group without the need for the network device to reconfigure or re-initialize the corresponding selective activation configuration of the cell group. Therefore, in the selective activation of the cell group, the network device may provide the UE with the cell group to be activated or a candidate cell group. Subsequently, the cell group to be activated may be activated or deactivated without re-providing the configuration of the cell group.

In the selective activation of the cell group, the network device may provide a pre-configured candidate cell group or candidate cell to the UE. Subsequently, the UE may activate or deactivate the pre-configured candidate cell group or candidate cell according to the configuration (for example, the activation message) issued by the network device or a corresponding activation event without re-providing the configuration information of the cell group. Alternatively, in the cell group selective activation, the UE does not delete the corresponding cell group selective activation configuration after activating a new cell or cell group, or after applying a new cell configuration or cell group configuration, or accessing a new cell or cell group.

Cell changing may be performed via a control signaling during the cell changing, such as the LTM.

In a 5G system, the network device may provide multiple candidate cells or groups of candidate cells to the UE. The network device may subsequently control the UE to make changes in the multiple candidate cells or cell groups through an L1 signaling or an L2 signaling, for example, change the candidate cell or the candidate cell group from a candidate cell or cell group-1 to a candidate cell or cell group-2. The L1 signaling may include downlink control information (DCI), and the L2 signaling may include a MAC control element (CE) signaling.

One serving cell or cell group may correspond to one or more candidate cells or cell groups.

In an embodiment, the LTM is a procedure that may include the gNB receiving a measurement report of an L1 from the UE and, based on this, sending a handover command to change the serving cell of the UE through the MAC CE signaling. The LTM configuration is provided to the UE by the gNB through an RRC signaling. The LTM configuration includes a candidate cell associated with the LTM configuration. When cell handover is triggered, a candidate cell associated with the LTM is selected as the target cell. The candidate cell associated with the LTM configuration may be added, modified, and/or released by the network device through the RRC signaling.

In some embodiments, the LTM does not support a handover of the same control unit (intra-CU) or a PSCell change. To implement the handover of the same control unit or the PSCell change or a security update, it is needed to support configuring an L3 mobility while configuring the LTM, that is, handover, one or more of L3 mobility configurations such as the CHO, the PSCell change, the CPA, the CPC, and the cell group selective activation may be configured simultaneously with the LTM mobility configuration. In this case, for the LTM, the CHO, the CPAC, and the cell group selective activation, the UE stores corresponding configurations after receiving configuration information of the LTM, the CHO, the CPAC, and the cell group selective activation. For a handover of a network configuration and the PSCell change, the UE will immediately perform corresponding mobility operation after receiving corresponding configuration, and initiate uplink and downlink synchronous access to the target cell.

Reference is made to FIG. 6, which is a schematic diagram illustrating a method for processing information. The method is performed by a UE, and includes the following steps.

In step S100, in response to performing a first operation associated with a first mobility configuration of the UE, a second operation associated with a second mobility configuration of the UE is performed.

The UE may be a terminal that supports dual connectivity, multi-connectivity, or carrier aggregation.

A current serving cell of the UE may be one or more. A candidate cell of the UE may be one or more.

For example, a CHO configuration may be an L3 layer mobility configuration. In a case where the UE receives a conventional handover command and moves out of a location of a CHO cell associated with the CHO configuration, the CHO configuration becomes invalid. In this case, the UE will delete the CHO configuration based on a mobility operation of the conventional handover command.

The CHO configuration may be used in a scenario where the terminal has one or more serving cells, and/or the terminal has one or more candidate cells.

For example, the UE is configured by the network device with the first mobility configuration and the second mobility configuration, and in response to performing the first operation associated with the first mobility configuration of the UE, the second operation associated with the second mobility configuration of the UE is performed.

The first mobility configuration and the second mobility configuration are both collectively referred to as a mobility configuration.

The mobility configuration is related to the mobility of the UE. After the UE moves, the serving cell may change. For example, the mobility configuration includes, but is not limited to, an activation or deactivation configuration of a candidate cell and/or a candidate cell group. As another example, the mobility configuration may further include determining a configuration of a target cell. The target cell may be a cell accessed by the UE after handover or reselection, and is a next serving cell of the UE.

For example, the first operation is a mobility operation, and the second operation is a deleting operation or a retaining operation.

For example, in response to performing the first operation associated with the first mobility configuration of the UE, the second mobility configuration of the UE is deleted.

For example, in response to performing the first operation associated with the first mobility configuration of the UE, the second mobility configuration of the UE is retained.

For example, the first mobility configuration and second mobility configuration of the UE are sent by a network device. The network device may include a base station, which may be an evolved node base station (eNB), a node in a 5G system, such as a next-generation node base station (gNB), or a transmission and reception point (TRP), or a network device in a subsequent evolved communication system.

For example, the first operation associated with the first mobility configuration includes various operations related to a cell update (or change) of the UE. For example, the first operation associated with the first mobility configuration performed by the UE includes one or more of the following: operations related to changes in the Pcell of the UE, operations related to changes in an MCG of the UE, operations related to changes in the Scell of the UE, and operations related to changes in the SCG of the UE.

For example, conditions for performing the first operation associated with the first mobility configuration of the UE include, but are not limited to, one or more of:
a trigger condition associated with the mobility configuration being satisfied; and
receiving an instruction transmitted by the network device for indicating the UE to perform the first operation associated with the first mobility configuration.

For example, the UE is configured with multiple mobility configurations, and the multiple mobility configurations include:
an LTM configuration;
   or
the multiple mobility configurations include an LTM configuration and an L3 mobility configuration;
   or
the multiple of mobility configurations include an L3 mobility configuration.

For example, the L3 mobility configurations include one or more of: CHO, CPA, CPC, a configuration of cell selective activation, and secondary cell group activation or deactivation. The configuration of cell selective activation includes: a configuration of cell group selective activation associated with the MCG or the Pcell, and a configuration of cell group selective activation associated with the SCG or the PScell.

For example, the L3 mobility configuration includes a pre-configured L3 mobility configuration of the Pcell or the MCG. The pre-configured mobility configuration is a mobility configuration of a candidate target cell pre-configured by the network device for the UE. A mobility operation associated with the L3 mobility configuration are triggered based on an L3 configuration or an L3 signaling.

The LTM configuration and the L3 mobility configuration may be sent via a signaling. An L1 may be a physical layer, and a signaling of the physical layer may include at least DCI. A signaling of an L2 may include at least: MAC CE and the like. A signaling of an L3 may include an RRC signaling.

For example, the UE is configured with the multiple mobility configurations, and the multiple mobility configurations includes:
one or more of LTM and non-LTM mobility configurations.

For example, performing the second operation associated with the second mobility configuration of the UE may include: deleting or continuing to retain the second mobility configuration.

For example, a second mobility configuration that is invalid due to the first operation of the first mobility configuration is deleted; and/or a second mobility configuration that is not invalid due to the first operation of the first mobility configuration is retained. Alternatively, a second mobility configuration that is invalid after the first operation performs the first mobility configuration is deleted, and/or a second mobility configuration that is valid after the first operation performs the first mobility configuration is retained.

The Pcell and the Scell, or the MCG and the SCG, are adjacent or have overlapping geographical areas. If the first mobility configuration of a certain cell or cell group is executed, the mobility configuration (i.e., the second mobility configuration) of other cells of the UE may be invalid.

For example, in a case where the UE accesses a first Scell after the UE performs the first operation associated with the second mobility configuration, and the UE accesses a second Scell in the same Pcell after the UE performs the first operation associated with the first mobility configuration, the UE no longer accesses the first Scell, and the second mobility configuration is invalid.

As described above, since the UE has the first mobility configuration and the second mobility configuration, after the UE performs the first operation associated with the first mobility configuration, the second operation of the second mobility configuration, such as the retaining operation or the deleting operation is performed. Retaining the second mobility configuration of the UE facilitates the UE to perform the second operation associated with the second mobility configuration, reduces a situation for reconfiguring the second mobility configuration, and reduces the overhead of signaling. After the UE performs the first operation associated with the first mobility configuration, the second mobility configuration that is invalid due to the first operation associated with the first mobility configuration is deleted, a storage space occupied by the invalid second mobility configuration is reduced. This also minimizes the occurrence of failed access phenomenon caused by selecting an incorrect target cell due to triggering the continuously stored second mobility configuration, as well as poor communication quality after access.

For example, if the first mobility configuration is the LTM configuration, the second mobility configuration is the L3 mobility configuration.

For example, if the second mobility configuration is the LTM configuration, the first mobility configuration is the L3 mobility configuration.

If the first mobility configuration for the same type of cell or cell group is performed, the Pcell, the Scell, the MCG and/or the SCG of the terminal changes. Therefore, the L3 mobility configuration of the cell or cell group may be invalid, and thus it is needed to determine whether the second mobility configuration needs to be deleted.

If the first mobility configuration for the same type of cell or cell group is performed, the Pcell, the Scell, the MCG and/or the SCG of the terminal changes. Therefore, the LTM configuration of the cell or cell group may be invalid, and thus it is needed to determine whether the second mobility configuration needs to be deleted.

The Pcell and the Scell, or the MCG and the SCG are located adjacent to each other or have overlapping geographical areas. Therefore, if the first mobility configuration of a certain cell or cell group is performed, the mobility configuration of the other cells (i.e., the second mobility configuration) of the UE may be invalid. Therefore, it is needed to determine whether the second mobility configuration needs to be deleted.

For example, if the first mobility configuration is an LTM configuration associated with the MCG or the Pcell of the UE, the second mobility configuration is an LTM configuration associated with the SCG or the PScell of the UE. The Pcell of the UE is a Pcell where the UE is located, or the Pcell of the UE may be a cell to which the UE initiates an initial access. The MCG of the UE is an MCG of the Pcell where the UE is located, that is, a cell group that includes the Pcell.

For example, if the second mobility configuration is the LTM configuration associated with the MCG or the Pcell of the UE, the first mobility configuration is the LTM configuration associated with the SCG or the PScell of the UE.

For example, if the first mobility configuration is an L3 configuration associated with the MCG or the Pcell of the UE, the second mobility configuration is an L3 configuration associated with the SCG or the PScell of the UE.

For example, if the first mobility configuration is an L3 configuration associated with the SCG or the PScell of the UE, the second mobility configuration is an L3 configuration associated with the MCG or the Pcell of the UE. The Scell of the UE is a cell other than the Pcell where the UE is located. The Scell may include the PScell. The SCG of the UE is a cell group including the PScell where the UE is located.

For example, if the first mobility configuration is the LTM configuration associated with the MCG or the Pcell of the UE, the second mobility configuration is the L3 configuration associated with the SCG or the PScell of the UE.

For example, if the first mobility configuration is the L3 configuration associated with the MCG or the Pcell of the UE, the second mobility configuration is the LTM configuration associated with the SCG or the PScell of the UE.

In a case where the first mobility configuration for different types of cells or cell groups is performed, the Pcell, the Scell, the MCG, and/or the SCG of the terminal changes. Therefore, after an operation related to the first mobility configuration associated with the Pcell or the MCG of the UE is performed, the LTM configuration of the Pcell or the MCG may be invalid, and thus it is needed to determine whether the second mobility configuration needs to be deleted.

The Pcell and the Scell, or the MCG and the SCG are located adjacent to each other or have overlapping geographical areas. Therefore, if the first mobility configuration of a certain cell or cell group is performed, the mobility configuration of the other cells (i.e., the second mobility configuration) of the UE may be invalid. Therefore, it is needed to determine whether the second mobility configuration needs to be deleted.

After the UE performs the first operation associated with the first mobility configuration, the UE may move out of a source Pcell or a source MCG, and the UE may no longer access the source Pcell or the source MCG, resulting in the UE no longer accessing corresponding Scell or SCG, thereby causing the second mobility configuration of the Scell or the SCG to be invalidated. The second mobility configuration of the Scell or the SCG of the UE that is invalid due to the first operation associated with the first mobility configuration is performed, reducing a storage space occupied by the invalid second mobility configuration is reduced. This also minimizes the occurrence of failed access phenomenon caused by selecting an incorrect target cell due to triggering the continuously stored second mobility configuration, as well as poor communication quality after access.

As described above, since the UE has the first mobility configuration and the second mobility configuration, after the UE performs the first operation associated with the first mobility configuration, the second operation associated with the second mobility configuration of the UE, such as the retaining operation or the deleting operation is performed. Retaining the second mobility configuration of the UE facilitates the UE to perform the second operation associated with the second mobility configuration, reduces a situation for reconfiguring the second mobility configuration, and reduces the overhead of signaling. After the UE performs the first operation associated with the first mobility configuration, the second mobility configuration that is invalid due to the first operation associated with the first mobility configuration is deleted, the storage space occupied by the invalid second mobility configuration is reduced. This also minimizes the occurrence of failed access phenomenon caused by selecting an incorrect target cell due to triggering the continuously stored second mobility configuration, as well as poor communication quality after access.

After the UE performs the first operation associated with the first mobility configuration, the UE retains the second mobility configuration of the UE, which facilitates the UE to perform the first operation associated with the second mobility configuration, reduces the situation of reconfiguring the second mobility configuration, and reduces the overhead of signaling.

Since the UE can access only one serving cell, it is not needed to configure multiple mobility configurations simultaneously, and the second mobility configuration is invalid after the UE performs the first operation associated with the first mobility configuration. Deleting the second mobility configuration that is invalidated by the first mobility configuration reduces the storage space occupied by the invalid second configuration. This also minimizes the occurrence of failed access phenomenon caused by selecting an incorrect target cell due to triggering the continuously stored second mobility configuration, as well as poor communication quality after access.

In an embodiment, reference is made to FIG. 7, which is a schematic diagram illustrating another method for processing information. The method is performed by a UE, and includes the following steps.

In step S200, in response to a first mobility configuration and a second mobility configuration being associated with the same type of cell or cell group of the UE, and performing a first operation associated with the first mobility configuration of the UE, a second operation associated with a second mobility configuration of the UE is performed.

For example, the first mobility configuration and the second mobility configuration are associated with the same type of cell or cell group of the UE.

The first operation includes a mobility operation associated with the first mobility configuration.

The second operation includes deleting or retaining the second mobility configuration.

For example, a type of cell includes one or more of a Pcell and a PScell.

For example, the type of cell may also include a Scell.

For example, a type of cell group includes one or more of an MCG and a SCG. For another example, the type of cell group includes a special cell group.

For example, the first mobility configuration and the second mobility configuration are associated with the same type of cell or cell group of the UE. The first operation includes the mobility operation associated with the first mobility configuration. The second operation includes deleting or retaining the second mobility configuration.

In an embodiment, the first mobility configuration is an LTM configuration and the second mobility configuration is an L3 mobility configuration. In response to the first mobility configuration and the second mobility configuration being associated with the same type of cell or cell group of the UE, and performing a first operation associated with the LTM configuration of the UE, the L3 mobility configuration of the UE is retained or deleted.

In an embodiment, the first mobility configuration is the L3 mobility configuration and the second mobility configuration is the LTM configuration. In response to the first mobility configuration and the second mobility configuration being associated with the same type of cell or cell group of the UE, and performing a first operation associated with the L3 mobility configuration of the UE, the LTM configuration of the UE is retained or deleted.

For example, in response to the first mobility configuration and the second mobility configuration being associated with the Pcell or the MCG of the UE, and performing the first operation associated with the first mobility configuration of the UE, the second operation associated with the second mobility configuration of the UE is performed.

For example, in response to the first mobility configuration and the second mobility configuration being associated with the PScell or the SCG including the PScell of the UE, and performing the first operation associated with the first mobility configuration of the UE, the second operation associated with the second mobility configuration of the UE is performed.

For example, the LTM configuration and the L3 mobility configuration are configured simultaneously, and if the L3 mobility configuration is triggered, the LTM configuration is deleted.

For example, if the LTM configuration is triggered, the L3 mobility configuration may be retained or deleted.

For example, the UE deletes the second mobility configuration after the UE completes the first operation associated with the first mobility configuration. That is, after the UE successfully accesses a target cell associated with the first mobility configuration, the second mobility configuration is deleted.

Since the first mobility configuration and the second mobility configuration are associated with the same type of cell or cell group of the UE, after performing the first operation associated with the first mobility configuration of the UE, the UE may move out of a location where a cell or cell group associated with the second mobility configuration is located, and the second mobility configuration becomes invalid. In such a case, the UE deletes the second mobility configuration to reduce the storage space occupied by the invalid second configuration. This also minimizes the occurrence of failed access phenomenon caused by selecting an incorrect target cell due to triggering of the continuously stored second mobility configuration, as well as poor communication quality after access. The UE retains the second mobility configuration of the UE, which facilitates the UE to perform the first operation associated with the second mobility configuration, reduces a situation of reconfiguring the second mobility configuration, and reduces the overhead of signaling.

For example, after the UE completes the first operation associated with the first mobility configuration and the UE successfully accesses the corresponding target cell, the UE deletes the second mobility configuration.

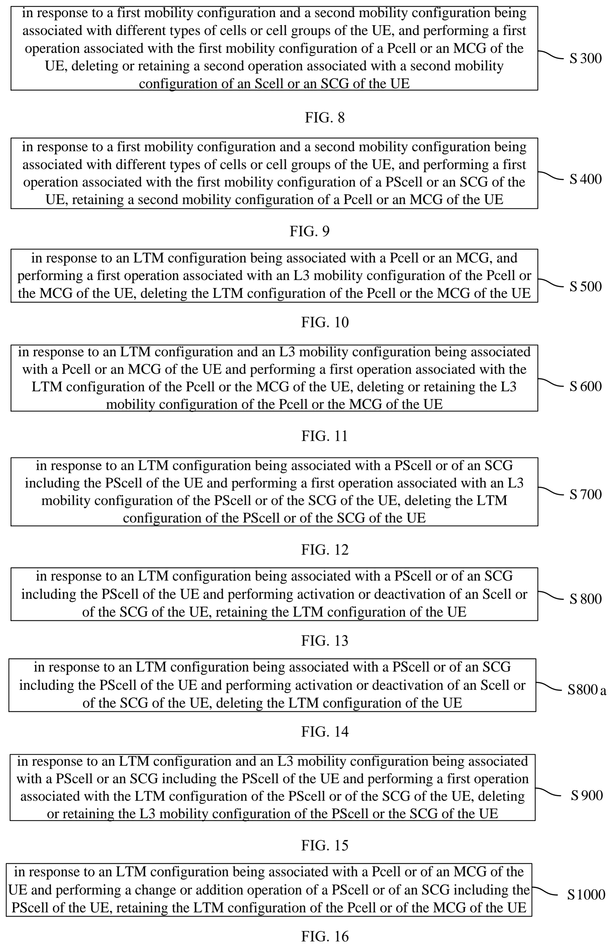

In an embodiment, reference is made to FIG. 8, which is a schematic diagram illustrating another method for processing information. The method is performed by a UE, and includes the following steps.

In step S300, in response to a first mobility configuration and a second mobility configuration being associated with different types of cells or cell groups of the UE, and performing a first operation associated with the first mobility configuration of a Pcell or an MCG of the UE, a second operation associated with a second mobility configuration of an Scell or an SCG of the UE is deleted or retained.

For example, the first mobility configuration and the second mobility configuration are associated with different types of cells or cell groups of the UE.

The first operation includes a mobility operation of the Pcell or of the MCG of the UE; and the second operation includes deleting or retaining the second mobility configuration.

For example, a type of cell includes the Pcell and the Scell. For another example, the type of cell includes a special cell.

A type of cell group includes the MCG and the SCG. For another example, the type of cell group includes a special cell group.

The second mobility configuration of the Scell or the SCG of the UE is deleted after performing the first operation associated with the first mobility configuration of the Pcell or the MCG of the UE.

Since the Pcell or the MCG of the UE may change after performing the first operation associated with the first mobility configuration of the Pcell or the MCG of the UE, the UE may move out of a source Pcell or a source MCG after performing the first operation associated with the first mobility configuration, causing the second mobility configuration of the Scell or the SCG to be invalidated. The second mobility configuration of the Scell or the SCG that is invalid due to performing the first operation associated with the first mobility configuration is deleted, the storage space occupied by the invalid second mobility configuration is reduced. This also minimizes the occurrence of failed access phenomenon caused by selecting an incorrect target cell due to triggering of the continuously stored second mobility configuration, as well as poor communication quality after access.

For example, the first mobility configuration is associated with the Pcell or the MCG of the UE, and the second mobility configuration is associated with the Scell or the SCG of the UE. The first operation includes an operation associated with the first mobility configuration of the Pcell or the MCG of the UE, and the second operation includes deleting or retaining the second mobility configuration of the Scell or the SCG of the UE.

After the UE performs the first operation associated with the first mobility configuration, the UE may move out of the cell or cell group associated with the second mobility configuration, delete the second mobility configuration that is invalid due to the first mobility associated with the first mobility configuration. This reduces the storage space occupied by the invalid second mobility configuration. This also minimizes the occurrence of failed access phenomenon caused by selecting an incorrect target cell due to triggering of the continuously stored second mobility configuration, as well as poor communication quality after access.

For example, the second mobility configuration is associated with the Pcell or the MCG of the UE, and the first mobility configuration is associated with the Scell or the SCG of the UE. The first operation includes an operation associated with the second mobility configuration of the Pcell or the MCG of the UE, and the second operation includes deleting or retaining the first mobility configuration of the Scell or the SCG of the UE.

For example, the first mobility configuration is an LTM configuration associated with the Pcell or the MCG of the UE, and the second mobility configuration is an LTM configuration associated with a PScell or the SCG of the UE. The first mobility configuration and the second mobility configuration are associated with different types of cells or cell groups of the UE. The first operation includes the operation associated with the LTM configuration of the Pcell or the MCG of the UE, and the second operation includes deleting or retaining the LTM configuration of the Scell or the SCG of the UE.

For example, the first mobility configuration is the LTM configuration associated with the Pcell or the MCG of the UE, and the second mobility configuration is an L3 mobility configuration associated with the PScell or the SCG of the UE. The first mobility configuration and the second mobility configuration are associated with different types of cells or cell groups of the UE. The first operation includes the operation associated with the LTM configuration of the Pcell or the MCG of the UE, and the second operation includes deleting or retaining the L3 mobility configuration of the Scell or the SCG of the UE.

For example, the first mobility configuration is an L3 mobility configuration associated with the Pcell or the MCG of the UE, and the second mobility configuration is the L3 mobility configuration associated with the PScell or the SCG of the UE. The first mobility configuration and the second mobility configuration are associated with different types of cells or cell groups of the UE. The first operation includes the operation associated with the L3 mobility configuration of the Pcell or the MCG of the UE, and the second operation includes deleting or retaining the L3 mobility configuration of the Scell or the SCG of the UE.

For example, the first mobility configuration is the L3 mobility configuration associated with the Pcell or the MCG of the UE, and the second mobility configuration is the LTM configuration associated with the PScell or the SCG of the UE. The first mobility configuration and the second mobility configuration are associated with different types of cells or cell groups of the UE. The first operation includes the operation associated with the L3 mobility configuration of the Pcell or the MCG of the UE, and the second operation includes deleting or retaining the LTM configuration of the Scell or the SCG of the UE.

Since the Pcell or the MCG is associated with the Scell or the SCG, in a case where the Pcell or the MCG changes, the corresponding Scell or SCG becomes invalid, and the UE no longer accesses the Scell or the SCG. Therefore, the UE may delete the second mobility configuration of the Scell or the SCG of the UE, reduce the storage space occupied by the invalid second mobility configuration. This also minimizes the occurrence of failed access phenomenon caused by selecting an incorrect target cell due to triggering of the continuously stored second mobility configuration, as well as poor communication quality after access.

In an embodiment, reference is made to FIG. 9, which is a schematic diagram illustrating another method for processing information. The method is performed by a UE, and includes the following steps.

In step S400, in response to a first mobility configuration and a second mobility configuration being associated with different types of cells or cell groups of the UE, and performing a first operation associated with the first mobility configuration of a PScell or an SCG of the UE, a second mobility configuration of a Pcell or an MCG of the UE is retained.

Since the Pcell or the MCG of the UE does not change after the first operation associated with the first mobility configuration of the PScell or the SCG of the UE is performed, the second mobility configuration of the Pcell or the MCG of the UE is retained, and an operation of re-configuring the second mobility configuration of the Pcell or the MCG of the UE may be reduced, the overhead of signaling is reduced, and the first operation associated with the second mobility configuration of the Pcell or the MCG of the UE may be further performed.

For example, the first mobility configuration and the second mobility configuration are associated with different types of cells or cell groups of the UE. The first operation includes a mobility operation of the Scell or of the SCG of the UE, and the second operation includes deleting or retaining the second mobility configuration.

For example, the first mobility configuration is associated with the Scell or the SCG including the Scell of the UE, and the second mobility configuration is associated with the Pcell or the MCG of the UE. The first operation includes an operation associated with the first mobility configuration of the PScell or the SCG of the UE, and the second operation includes deleting or retaining the second mobility configuration of the Pcell or the MCG of the UE.

For example, the second mobility configuration is associated with the Scell or the SCG including the Scell of the UE, and the first mobility configuration is associated with the Pcell or the MCG of the UE. The first operation includes an operation associated with the second mobility configuration of the PScell or the SCG of the UE, and the second operation includes deleting or retaining the first mobility configuration of the Pcell or the MCG of the UE.

For example, the first mobility configuration is an L3 mobility configuration associated with the Scell or the SCG including the Scell of the UE, and the second mobility configuration is an L3 mobility configuration associated with the Pcell or the MCG of the UE. The first mobility configuration and the second mobility configuration are associated with different types of cells or cell groups of the UE. The first operation includes an operation associated with the L3 mobility configuration of the PScell or the SCG of the UE, and the second operation includes retaining the L3 mobility configuration of the Pcell or the MCG of the UE.

For example, the first mobility configuration is the L3 mobility configuration associated with the Scell or the SCG including the Scell of the UE, and the second mobility configuration is the LTM configuration associated with the Pcell or the MCG of the UE. The first mobility configuration and the second mobility configuration are associated with different types of cells or cell groups of the UE. The first operation includes the operation associated with the L3 mobility configuration of the PScell or the SCG of the UE, and the second operation includes retaining the LTM configuration of the Pcell or the MCG of the UE.

For example, the first mobility configuration is an LTM configuration associated with the Scell or the SCG including the Scell of the UE, and the second mobility configuration is the LTM configuration associated with the Pcell or the MCG of the UE. The first mobility configuration and the second mobility configuration are associated with different types of cells or cell groups of the UE. The first operation includes an operation associated with the LTM configuration of the PScell or the SCG of the UE, and the second operation includes retaining the LTM configuration of the Pcell or the MCG of the UE.

For example, the first mobility configuration is the LTM configuration associated with the Scell or the SCG including the Scell of the UE, and the second mobility configuration is the L3 mobility configuration associated with the Pcell or the MCG of the UE. The first mobility configuration and the second mobility configuration are associated with different types of cells or cell groups of the UE. The first operation includes the operation associated with the LTM configuration of the PScell or the SCG of the UE, and the second operation includes retaining the L3 mobility configuration of the Pcell or the MCG of the UE.

In an embodiment, reference is made to FIG. 10, which is a schematic diagram illustrating another method for processing information. The method is performed by a UE, and includes the following steps.

In step S500, in response to an LTM configuration being associated with a Pcell or an MCG, and performing a first operation associated with an L3 mobility configuration of the Pcell or the MCG of the UE, the LTM configuration of the Pcell or the MCG of the UE is deleted.

For example, the first mobility configuration is the L3 mobility configuration of the Pcell or of the MCG of the UE;
the first operation includes a mobility operation of the Pcell or of the MCG of the UE;
the second mobility configuration is the LTM configuration of the Pcell or of the MCG of the UE; and
the second operation includes deleting the second mobility configuration.

For example, performing a first operation associated with the L3 mobility configuration of the Pcell or of the MCG of the UE may include performing a first operation associated with a non-LTM configuration of the UE.

The first mobility configuration is the L3 mobility configuration and the second mobility configuration is the LTM configuration. The first mobility configuration and the second mobility configuration are associated with the same type of cell or cell group of the UE. After performing the first operation associated with the L3 mobility configuration of the UE, the UE may move out of a location of the cell or cell group associated with the LTM configuration, and the LTM configuration becomes invalid. In such a case, the UE deletes the LTM configuration of the UE, reduces a storage space occupied by the invalid LTM configuration. This also minimizes the occurrence of failed access phenomenon caused by selecting an incorrect target cell due to triggering of the continuously stored second mobility configuration, as well as poor communication quality after access.

For example, the second mobility configuration is the LTM configuration of the Pcell or of the MCG of the UE, and the first mobility configuration is the L3 mobility configuration of the Pcell or of the MCG of the UE. The L3 mobility configuration includes the UE receiving an RRC signaling sent by a network device. The first operation includes an operation associated with the L3 mobility configuration of the Pcell or of the MCG of the UE, and the second operation includes deleting the LTM configuration of the Pcell or of the MCG of the UE. For example, the RRC signaling carries a handover command.

For example, the second mobility configuration is the LTM configuration of the Pcell or of the MCG of the UE, and the first mobility configuration is a CHO of the Pcell or of the MCG of the UE. The first operation includes triggering a triggering condition of the conditional handover to perform a cell handover, that is, the UE meets the triggering condition of the CHO and performs the cell handover, and the second operation includes deleting the LTM configuration of the Pcell or of the MCG of the UE.

For example, the second mobility configuration is the LTM configuration of the Pcell or of the MCG of the UE, and the first mobility configuration is the cell group selective activation configuration of the Pcell or of the MCG of the UE. The first operation includes cell selective activation, that is, the UE meets the conditions for cell group selective activation and performs the cell selective activation, and the second operation includes deleting the LTM configuration of the Pcell or of the MCG of the UE.

In an embodiment, reference is made to FIG. 11, which is a schematic diagram illustrating another method for processing information. The method is performed by a UE, and includes the following steps.

In step S600, in response to an LTM configuration and an L3 mobility configuration being associated with a Pcell or an MCG of the UE and performing a first operation associated with the LTM configuration of the Pcell or the MCG of the UE, the L3 mobility configuration of the Pcell or the MCG of the UE is deleted or retained.

For example, the L3 mobility configuration includes one or more of CHO and selective activation for the MCG or the Pcell.

For example, the L3 mobility configuration includes a pre-configured L3 mobility configuration for the Pcell or the MCG. The pre-configured mobility configuration is a mobility configuration that a network device pre-configures for a candidate target cell of the UE. Then, a first operation associated with the L3 mobility configuration is triggered based on an L3 configuration or an L3 signaling.

The first mobility configuration is the LTM configuration, and the second mobility configuration is the L3 mobility configuration. In a case where the first mobility configuration and the second mobility configuration are associated with the Pcell or the MCG of the UE, after the first operation associated with the LTM configuration of the UE is performed, the UE may move out of a location of a cell or a cell group associated with the L3 mobility configuration, and the L3 mobility configuration becomes invalid. In such a case, the UE deletes the L3 mobility configuration of the UE. This reduces a storage space occupied by the invalid L3 mobility configuration, and also minimizes the occurrence of failed access phenomenon caused by selecting an incorrect target cell due to triggering of the continuously stored L3 mobility configuration, as well as poor communication quality after access.

For example, the first mobility configuration is the LTM configuration of the Pcell or of the MCG of the UE;
the first operation includes a mobility operation of the Pcell or of the MCG of the UE;
the second mobility configuration is the L3 mobility configuration of the Pcell or of the MCG of the UE; and
the second operation includes deleting or retaining the second mobility configuration.

For example, the first mobility configuration is the LTM configuration of the Pcell or of the MCG of the UE, the second mobility configuration is a CHO configuration of the Pcell or of the MCG of the UE, the first operation includes a mobility operation associated with the LTM configuration of the Pcell or of the MCG of the UE, and the second operation includes deleting the configuration related to the CHO.

A layer 2 and/or layer 1 message for performing the LTM configuration is included in an RRC signaling.

The CHO configuration may be an L3 layer mobility configuration. The UE receives the layer 2 and/or layer 1 message for performing the LTM configuration, and performs the first operation associated with the LTM configuration of the Pcell or of the MCG of the UE, resulting in moving out of a location of a CHO cell associated with the CHO configuration, and the CHO configuration is invalid. In this case, the UE deletes the CHO configuration based on the first operation associated with the LTM configuration of the Pcell or of the MCG of the UE.

For example, the first mobility configuration is the layer 2 and/or layer 1 message for performing the LTM configuration of the Pcell or of the MCG of the UE, the second mobility configuration is a configuration of a cell group selective activation of the Pcell or of the MCG of the UE, the first operation includes a mobility operation associated with the LTM configuration of the Pcell or of the MCG of the UE, and the second operation includes deleting the configuration related to the cell group selective activation.

For example, the second mobility configuration is the configuration of the cell group selective activation of the Pcell or of the MCG of the UE, the first mobility configuration is the layer 2 and/or layer 1 message for performing the LTM configuration of the Pcell or of the MCG of the UE, the first operation includes the mobility operation associated with the LTM configuration of the Pcell or of the MCG of the UE, and the second operation includes retaining the configuration related to the cell group selective activation.

In an embodiment, reference is made to FIG. 12, which is a schematic diagram illustrating another method for processing information. The method is performed by a UE, and includes the following steps.

In step S700, in response to an LTM configuration being associated with a PScell or of an SCG including the PScell of the UE and performing a first operation associated with an L3 mobility configuration of the PScell or of the SCG of the UE, the LTM configuration of the PScell or of the SCG of the UE is deleted.

The LTM configuration and a non-LTM configuration are associated with the PScell or of the SCG including the PScell of the UE, and the non-LTM configuration includes the L3 mobility configuration of the PScell or of the SCG of the UE.

The first mobility configuration is the LTM configuration, and the second mobility configuration is the L3 mobility configuration. In a case where the first mobility configuration and the second mobility configuration are associated with the PScell or of the SCG including the PScell of the UE, after the first operation associated with the LTM configuration of the UE is performed, the UE may move out of a location of an Scell or the SCG associated with the LTM configuration, and the LTM configuration becomes invalid. In such a case, the UE deletes the LTM configuration of the UE. This reduces a storage space occupied by the invalid LTM configuration, and also minimizes the occurrence of failed access phenomenon caused by selecting an incorrect target cell due to triggering of the continuously stored LTM configuration, as well as poor communication quality after access.

The L3 mobility configuration includes an RRC signaling, a CPC, a CPA, and a selective activation for the PScell or for the SCG.

For example, the RRC signaling is an RRC signaling used to configure a handover command.

For example, the first mobility configuration is the L3 mobility configuration of the PScell or the SCG including the PScell of the UE;
the first operation includes a mobility operation of the PScell or of the SCG of the UE;
the second mobility configuration is the LTM configuration of the PScell or of the SCG of the UE; and
the second operation includes deleting the second mobility configuration.

For example, the second mobility configuration is the LTM configuration of the PScell or of the SCG of the UE, and the first mobility configuration is the L3 mobility configuration of the PScell or of the SCG of the UE. The L3 mobility configuration of the PScell or of the SCG of the UE includes the RRC signaling sent by a network device. The first operation includes an operation associated with the L3 mobility configuration of the PScell or of the SCG of the UE, and the second operation includes deleting the LTM configuration of the PScell or of the SCG of the UE. The RRC signaling carries indication information that indicates the UE to perform the operation associated with the L3 mobility configuration of the PScell or of the SCG of the UE.

For example, the first mobility configuration is an L3 mobility configuration of the Pcell or of the MCG of the UE, and the L3 mobility configuration includes a configuration of the CPC or of the CPA, and the second mobility configuration is the LTM configuration of the Pcell or of the MCG of the UE. The first operation includes the operation associated with the L3 mobility configuration of the PScell or of the SCG of the UE, and the second operation includes deleting the LTM configuration of the PScell or of the SCG of the UE.

For example, the first mobility configuration is a cell group selective activation of the Pcell or of the MCG of the UE, the second mobility configuration is the LTM configuration of the PScell or of the SCG of the UE, the first operation includes a cell group selective activation operation of the Pcell or of the MCG of the UE, and the second operation includes deleting the LTM configuration of the PScell or of the SCG of the UE.

In an embodiment, reference is made to FIG. 13, which is a schematic diagram illustrating another method for processing information. The method is performed by a UE, and includes the following steps.

In step S800, in response to an LTM configuration being associated with a PScell or of an SCG including the PScell of the UE and performing activation or deactivation of a Scell or of the SCG of the UE, the LTM configuration of the UE is retained.

For example, the first mobility configuration is a configuration of activation or deactivation of the Scell or of the SCG of the UE;
the first operation includes the activation or the deactivation of the Scell or of the SCG of the UE;
the second mobility configuration is the LTM configuration of the PScell or of the SCG including the PScell of the UE; and
the second operation includes retaining the second mobility configuration.

Reference is made to FIG. 14, which is a schematic diagram illustrating another method for processing information. The method is performed by a UE, and includes the following steps.

In step S800a, in response to an LTM configuration being associated with a PScell or of an SCG including the PScell of the UE and performing activation or deactivation of a Scell or of the SCG of the UE, the LTM configuration of the UE is deleted.

Reference is made to FIG. 15, which is a schematic diagram illustrating another method for processing information. The method is performed by a UE, and includes the following steps.

In step S900, in response to an LTM configuration and an L3 mobility configuration being associated with a PScell or an SCG including the PScell of the UE and performing a first operation associated with the LTM configuration of the PScell or of the SCG of the UE, the L3 mobility configuration of the PScell or the SCG of the UE is deleted or retained.

The L3 mobility configuration includes one or more of a CPC, a PCA, and a cell group selective activation of the PScell or of the SCG including the PScell of the UE.

The first mobility configuration is the LTM configuration, and the second mobility configuration is the L3 mobility configuration. In a case where the first mobility configuration and the second mobility configuration are associated with the PScell or of the SCG including the PScell of the UE, after the first operation associated with the LTM configuration of the UE is performed, the UE may move out of a location of an Scell or the SCG associated with the L3 mobility configuration, and the L3 mobility configuration becomes invalid. In such a case, the UE deletes the L3 mobility configuration of the UE. This reduces a storage space occupied by the invalid L3 mobility configuration, and also minimizes the occurrence of failed access phenomenon caused by selecting an incorrect target cell due to triggering of the continuously stored L3 mobility configuration, as well as poor communication quality after access.

For example, the first mobility configuration is the LTM configuration of the PScell or of the SCG including the PScell of the UE;
the first operation includes a mobility operation of the PScell or of the SCG of the UE;
the second mobility configuration is the L3 mobility configuration of the PScell or of the SCG including the PScell of the UE; and
the second operation includes deleting or retaining the second mobility configuration.

For example, the second mobility configuration is a configuration of the CPC or of the PCA of the PScell or of the SCG including the PScell of the UE, the first mobility configuration is a layer 2 and/or layer 1 message of the PScell or of the SCG including the PScell of the UE, the first operation includes an operation associated with the LTM configuration of the PScell or the SCG of the UE, and the second operation includes deleting or retaining the configuration related to the CPC or the PCA of the UE.

For example, the configuration of the CPC or of the PCA may be an L3 mobility configuration. The UE receives the layer 2 and/or layer 1 message for performing the first operation associated with the LTM configuration and performs the first operation associated with the LTM configuration of the PScell or the SCG of the UE, resulting in moving out of a location of the PScell or of the SCG including the PScell associated with the configuration of the CPC or of the PCA, and the configuration of the CPC or of the PCA is invalid. In this case, the UE deletes the configuration of the CPC or of the PCA based on the first operation associated with the LTM configuration of the PScell or of the SCG of the UE.

For example, the second mobility configuration is a configuration of a cell group selective activation of the PScell or of the SCG including the PScell of the UE, the first mobility configuration is the layer 2 and/or layer 1 messages of the PScell or of the SCG including the PScell of the UE, the first operation includes an operation associated with the layer 2 and/or layer 1 messages of the PScell or of the SCG of the UE, and the second operation includes deleting the configuration related to the cell group selective activation.

For example, the second mobility configuration is the configuration of the cell group selective activation of the PScell or of the SCG including the PScell of the UE, the first mobility configuration is the layer 2 and/or layer 1 message for performing a first operation associated with the LTM configuration, the first operation includes an operation associated with the LTM configuration of the PScell or of the SCG of the UE, and the second operation includes retaining the configuration related to the cell group selective activation.

For example, the configuration of the CPC or of the PCA may be the L3 mobility configuration. The UE receives the layer 2 and/or layer 1 message for performing the first operation associated with the LTM configuration and performs the first operation associated with the LTM configuration of the PScell or the SCG of the UE, resulting in moving out of the location of the PScell or of the SCG including the PScell associated with the configuration of the CPC or of the PCA, and the configuration of the CPC or of the PCA is invalid. In this case, the UE deletes the configuration of the CPC or of the PCA based on the first operation associated with the LTM configuration of the PScell or of the SCG of the UE.

In an embodiment, reference is made to FIG. 16, which is a schematic diagram illustrating another method for processing information. The method is performed by a UE, and includes the following steps.

In step S1000, in response to an LTM configuration being associated with a Pcell or of an MCG of the UE and performing a change or addition operation of a PScell or of an SCG including the PScell of the UE, the LTM configuration of the Pcell or of the MCG of the UE is retained.

The change or addition operation of the PScell or of the SCG including the PScell of the UE is one of L3 mobility configurations. After performing the change or addition operation of the PScell or of the SCG of the UE, the Pcell or the MCG of the UE does not change, and the second mobility configuration of the Pcell or the MCG of the UE is retained, which may reduce an operation of re-configuring the second mobility configuration of the Pcell or the MCG of the UE, reduce the overhead of signaling, and facilitate a subsequent execution of the first operation associated with the second mobility configuration of the Pcell or the MCG of the UE.

For example, performing the change or addition operation of the PScell or of the SCG including the PScell of the UE includes:
performing the change or addition operation of the PScell or of the SCG including the PScell of the UE based on an RRC signaling, a CPC, a CPA, an LTM configuration of the SCG or of the PScell, and selective activation of the SCG or of the PScell; and
performing the change or addition operation of the PScell or of the SCG including the PScell of the UE in a case where the RRC signaling, the CPC, the CPA, the LTM configuration of the SCG or of the PScell, and the selective activation of the SCG or of the PScell are triggered.

For example, the first mobility configuration is the LTM configuration of the Pcell or of the MCG of the UE;
the first operation includes the change or addition operation of the PScell or of the SCG including the PScell of the UE;
the second mobility configuration is the LTM configuration of the Pcell or of the MCG of the UE; and
the second operation includes retaining the second mobility configuration.

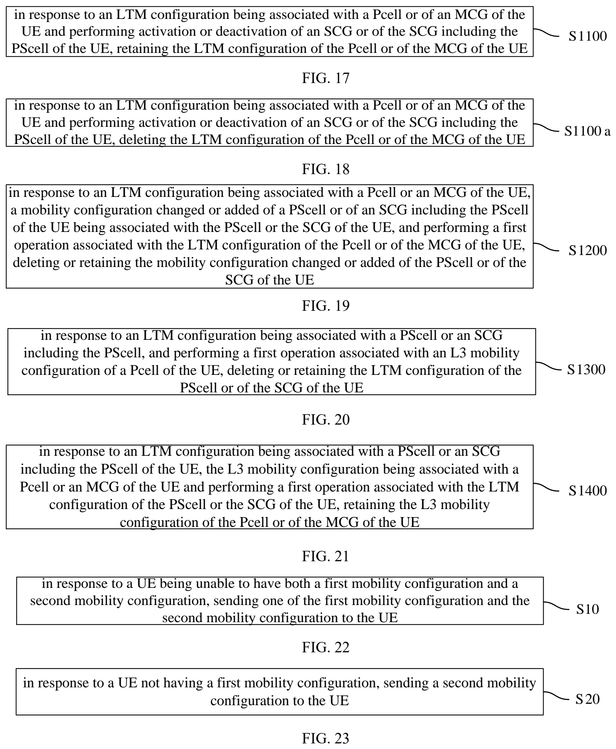

In an embodiment, reference is made to FIG. 17, which is a schematic diagram illustrating another method for processing information. The method is performed by a UE, and includes the following steps.

In step S1100, in response to an LTM configuration being associated with a Pcell or of an MCG of the UE and performing activation or deactivation of an SCG or of the SCG including the PScell of the UE, the LTM configuration of the Pcell or of the MCG of the UE is retained.

For example, the first mobility configuration is the LTM configuration of the Pcell or of the MCG of the UE;
the first operation includes the activation or deactivation of the SCG or of the SCG including the PScell of the UE;
the second mobility configuration is the LTM configuration of the Pcell or of the MCG of the UE; and
the second operation includes retaining the second mobility configuration.

In an embodiment, reference is made to FIG. 18, which is a schematic diagram illustrating another method for processing information. The method is performed by a UE, and includes the following steps.

In step S1100a, in response to an LTM configuration being associated with a Pcell or of an MCG of the UE and performing activation or deactivation of an SCG or of the SCG including the PScell of the UE, the LTM configuration of the Pcell or of the MCG of the UE is deleted.

In an embodiment, reference is made to FIG. 19, which is a schematic diagram illustrating another method for processing information. The method is performed by a UE, and includes the following steps.

In step S1200, in response to an LTM configuration being associated with a Pcell or an MCG of the UE, a mobility configuration for change or addition of a PScell or of an SCG including the PScell of the UE being associated with the PScell or the SCG of the UE, and performing a first operation associated with the LTM configuration of the Pcell or of the MCG of the UE, the mobility configuration for change or addition of the PScell or of the SCG of the UE is deleted or retained.

Since the Pcell or the MCG of the UE may change after performing the first operation associated with the LTM configuration of the Pcell or of the MCG of the UE, the UE may move out of a source Pcell or a source MCG after performing the first operation associated with the LTM configuration, such that the mobility configuration for change or addition of the PScell or of the SCG including the PScell of the UE is invalid. The mobility configuration for change or addition of the PScell or of the SCG including the PScell of the UE that is invalid due to the first operation associated with the LTM configuration is delete. This reduces a storage space occupied by the invalid mobility configuration for change or addition of the PScell or of the SCG including the PScell of the UE, and also minimizes the occurrence of failed access phenomenon caused by selecting an incorrect target cell due to triggering of the continuously stored mobility configuration for change or addition of the PScell or of the SCG including the PScell of the UE, as well as poor communication quality after access.

The mobility configuration for change or addition of the PScell or of the SCG including the PScell of the UE may include: a CPC, a CPA, an LTM configuration or a cell selective activation for change or addition of the PScell or of the SCG including the PScell of the UE.

For example, the first mobility configuration is the LTM configuration of the Pcell or of the MCG of the UE;
the first operation includes the mobility operation of the Pcell or of the MCG of the UE;
the second mobility configuration is a mobility configuration for change or addition of the PScell or of the SCG including the PScell of the UE; and
the second operation includes deleting or retaining the second mobility configuration.

In an embodiment, reference is made to FIG. 20, which is a schematic diagram illustrating another method for processing information. The method is performed by a UE, and includes the following steps.

In step S1300, in response to an LTM configuration being associated with a PScell or an SCG including the PScell of the UE, and performing a first operation associated with an L3 mobility configuration of a Pcell of the UE, the LTM configuration of the PScell or of the SCG of the UE is deleted or retained.

Since the Pcell or the MCG of the UE may change after performing the first operation associated with the L3 mobility configuration of the Pcell or of the MCG of the UE, the UE may move out of a source Pcell or a source MCG after performing the first operation associated with the L3 mobility configuration, thereby causing the LTM configuration of an Scell or the SCG to be invalidated. The LTM configuration of the Scell or the SCG of the UE that is invalid because the first operation associated with the L3 mobility configuration is performed is deleted. This reduces a storage space occupied by the invalid LTM configuration, and also minimizes the occurrence of failed access phenomenon caused by selecting an incorrect target cell due to triggering of the continuously stored LTM configuration, as well as poor communication quality after access.

Performing the first operation associated with the L3 mobility configuration of the Pcell of the UE may include: performing the operation based on an RRC signaling sent by a network device received by the UE, performing the operation by triggering a CHO, performing the operation by triggering the LTM configuration of the Pcell of the UE, or performing the operation by a selective activation operation of the Pcell or of the MCG.

For example, the first mobility configuration is the L3 mobility configuration of the Pcell of the UE;
the first operation includes the mobility operation of the Pcell of the UE;
the second mobility configuration is the LTM configuration of the PScell or a SCG including the PScell of the UE; and
the second operation includes: deleting or retaining the second mobility configuration.

In an embodiment, reference is made to FIG. 21, which is a schematic diagram illustrating another method for processing information. The method is performed by a UE, and includes the following steps.

In step S1400, in response to an LTM configuration being associated with a PScell or an SCG including the PScell of the UE, the L3 mobility configuration being associated with a Pcell or an MCG of the UE and performing a first operation associated with the LTM configuration of the PScell or the SCG of the UE, the L3 mobility configuration of the Pcell or of the MCG of the UE is retained.

Performing the first operation associated with the LTM configuration of the PScell or the SCG of the UE may include performing the operation when triggering a trigger condition that triggers a CHO, performing the operation according to the LTM configuration of the Pcell, or performing the operation according to a cell group selective activation of the Pcell or the MCG.

After performing the first operation associated with the LTM configuration of the PScell or the SCG of the UE, the Pcell or the MCG of the UE does not change, and the L3 mobility configuration of the Pcell or of the MCG of the UE is retained, which may reduce the operation of re-configuring the L3 mobility configuration of the Pcell or of the MCG of the UE, reduce the overhead of signaling, and facilitate a subsequent execution of the first operation associated with the L3 mobility configuration of the Pcell or the MCG of the UE.

For example, the first mobility configuration is the LTM configuration of the PScell or of the SCG including the PScell of the UE;
the first operation includes the mobility operation of the PScell or of the SCG of the UE;
the second mobility configuration is the L3 mobility configuration of the Pcell or of the MCG of the UE; and
the second operation includes retaining the second mobility configuration.

In an embodiment, reference is made to FIG. 22, which is a schematic diagram illustrating another method for processing information. The method is performed by a network device, and includes the following steps.

In step S10, in response to a UE being unable to have both a first mobility configuration and a second mobility configuration, one of the first mobility configuration and the second mobility configuration is sent to the UE.

For example, step S10 may include, but is not limited to:
in response to the UE having the first mobility configuration, the second mobility configuration is not sent to the UE;
   and/or
in response to the UE having the second mobility configuration, the first mobility configuration is not sent to the UE.

It is determined whether a current UE already has the first mobility configuration and/or the second mobility configuration by recorded information of the mobility configuration sent to the UE by the network device or based on a network implementation. It is determined whether the corresponding mobility configuration may be sent to the UE in a case where one of the first mobility configuration and the second mobility configuration needs to be sent to the UE according to the recorded information, thereby reducing a situation in which the UE has both the first mobility configuration and the second mobility configuration, and reducing a phenomenon in which one mobility configuration is invalid because a first operation of the other mobility configuration is triggered when the UE has both the first mobility configuration and the second mobility configuration. In a case where the UE has one mobility configuration, another mobility configuration is not sent to the UE, and the overhead of signaling of the network device may be reduced.

In an embodiment, in a case where it is determined that the UE has the first mobility configuration based on the recorded information, and a current mobility configuration to be sent is the first mobility configuration, a updated first mobility configuration is sent to the UE.

This is equivalent to updating the first mobility configuration of the UE.

In an embodiment, in a case where it is determined that the UE has the second mobility configuration based on the recorded information, and the current mobility configuration to be sent is the second mobility configuration, a updated second mobility configuration is sent to the UE.

This is equivalent to updating the second mobility configuration of the UE.

That is, in a case where it is determined based on the recorded information that the mobility configuration already possessed by the UE is of a different type than the mobility configurations currently to be sent, sending of the mobility configuration to be sent is suspended. Alternatively, the current mobility configuration to be sent is sent to the UE in a case of indicating the UE to delete the existing mobility configuration, thereby realizing flexible sending of different types of mobility configurations in a case where the UE does not have multiple mobility configurations simultaneously.

In an embodiment, the recorded information may include at least: a configuration identifier of the existing mobility configuration of the UE, configuration type information, and/or a configuration content of the mobility configuration and the like. Therefore, the network device may determine whether the current UE already has the first mobility configuration and/or the second mobility configuration based on a matching of the configuration identifier of the mobility configuration possessed by the UE with the configuration identifier of the mobility configuration to be sent, a matching of the configuration type information of the mobility configuration possessed by the UE with the configuration type information of the mobility configuration to be sent, and/or a matching of the configuration content of the mobility configuration possessed by the UE with the configuration content of the mobility configuration to be sent.

For example, the configuration identifier may be an ID. The ID may be an ID of a cell or a cell group, and different cells or cell groups have different IDs.

For example, the network device may include a base station, which may be an eNB, a node in a 5G system, such as a gNB, or a TRP, or a network device in a subsequent evolution communication system.

The UE may be a terminal that supports dual connectivity, multi-connectivity, or carrier aggregation.

A current serving cell of the UE may be one or more. A candidate cell of the UE may be one or more.

The first mobility configuration and the second mobility configuration are collectively referred to as the mobility configuration.

The mobility configuration is related to a mobility of the UE. After the UE moves, the serving cell may change. For example, the mobility configuration includes, but is not limited to, activation or deactivation configurations of the candidate cell and/or the candidate cell group. As another example, the mobility configuration may further include: determining the configuration of the target cell. The target cell may be the cell that the UE accesses after handover or reselection, and is the next serving cell of the UE.

For example, the UE is configured with multiple mobility configurations, including:
one or more of an LTM configuration and an L3 mobility configuration.

The L3 mobility configurations include one or more of: a CHO, a CPA, a CPC, a configuration of cell selective activation, and secondary cell group activation or deactivation. The configuration of cell selective activation includes: a configuration of cell group selective activation associated with the MCG or the Pcell, and a configuration of cell group selective activation associated with the SCG or the PScell.

The LTM configuration and the L3 mobility configuration may be sent via a signaling. The L1 may be a physical layer, and a signaling of the physical layer may include at least DCI. A signaling of the L2 may include at least: an MAC CE and the like. A signaling of an L3 may include an RRC signaling.

The network device sends a first mobility configuration or a second mobility configuration to the UE. By controlling the mobility configuration sent to the UE, the network device may ensure that the UE has one mobility configuration at the same time, such as the first mobility configuration or the second mobility configuration. The network device will not send another mobility configuration to the UE when the UE already has one mobility configuration, thereby reducing a situation where the UE has the first mobility configuration and the second mobility configuration simultaneously. The operation of deleting other mobility configurations that are invalid due to the execution of the first mobility configuration after executing one mobility configuration caused by the UE having the multiple mobility configurations is reduced, the execution procedure of the UE is reduced, and the occupied storage space is also reduced.

The UE has one current serving cell and one candidate cell. In this way, the network device does not need to send the multiple mobility configurations to the UE, the number of mobility configurations sent by the network device to the UE is reduced, and the overhead of signaling is reduced.

In another embodiment, the method further includes:
determining, according to a protocol agreement or a configuration policy of the network device, whether the UE is able to have both the first mobility configuration and the second mobility configuration.

In some embodiments, a protocol stipulates that the LTM configuration may not be configured simultaneously with a non-LTM mobility configuration, in which the non-LTM mobility configuration includes:
one or more of a CHO, a CPA, a CPC, a handover, a PSCell change, a PSCell addition, cell group selective activation, SCG activation/deactivation.

In some embodiments, the protocol stipulates that the LTM configuration associated with the MCG or the PCell may not be configured simultaneously with the LTM configuration associated with the SCG or the PSCell.

A communication protocol may include a configuration rule that indicate whether the UE may have both the first mobility configuration and the second mobility configuration. For example, different types of UEs may have different configuration rules. For example, some types of UEs support having both the first mobility configuration and the second mobility configuration, while other types of UEs do not support having both the first mobility configuration and the second mobility configuration. For another example, UEs using different wireless access technologies or accessing different PLMNs may have different configuration rules.

The configuration policy may include, but is not limited to, an operator policy of the network device. The configuration policy of the network device may indicate the UE to have both the first mobility configuration and the second mobility configuration, and may indicate the UE not to have both the first mobility configuration and the second mobility configuration. For example, different operators may have different configuration policies. For example, some operators' policies support the UE to have both the first mobility configuration and the second mobility configuration, while others do not support the UE to have both the first mobility configuration and the second mobility configuration.

In summary, the protocol agreement and/or the configuration policy allow the network device to determine whether a single UE, a group of UEs, or the current network supports the UE having both the first mobility configuration and the second mobility configuration.

In an embodiment, reference is made to FIG. 23, which is a schematic diagram illustrating another method for processing information. The method is performed by a network device, and includes the following steps.

In step S20, in response to a UE not having a first mobility configuration, a second mobility configuration is sent to the UE.

For example, if the first mobility configuration is an LTM configuration, the second mobility configuration is a non-LTM mobility configuration.

For example, if the second mobility configuration is the LTM configuration, the first mobility configuration is the non-LTM mobility configuration.

For example, if the first mobility configuration is the LTM configuration, the second mobility configuration is an L3 mobility configuration.

For example, if the second mobility configuration is the LTM configuration, the first mobility configuration is the L3 mobility configuration.

For example, if the first mobility configuration is an LTM configuration associated with an MCG or a Pcell of the UE, the second mobility configuration is an LTM configuration associated with a SCG or a PScell of the UE.

For example, if the second mobility configuration is an LTM configuration associated with the MCG or the Pcell of the UE, and the first mobility configuration is an LTM configuration associated with the SCG or the PScell of the UE.

In an embodiment, the method further includes:
in response to the UE already having the first mobility configuration, sending the second mobility configuration to the UE is prohibited, that is, the second mobility configuration is not sent to the UE.

Since the UE does not support having the multiple mobility configurations simultaneously, after determining that the UE has the first mobility configuration, the second mobility configuration will not be sent to the UE, such that the UE has one mobility configuration at the same time, such as having the first mobility configuration or the second mobility configuration, and another mobility configuration will not be sent to the UE in a case where the UE has one mobility configuration, thereby reducing the case that the UE has the first mobility configuration and the second mobility configuration simultaneously, reducing the case that the UE performs the first operation associated with the first mobility configuration to result in the invalidation of the second first operation in a case where the UE has the first mobility configuration and the second mobility configuration simultaneously, and reducing the operation of deleting or retaining the invalid second mobility configuration by the UE.

In a case where the UE has one mobility configuration, not sending another mobility configuration to the UE may reduce the overhead of signaling of the network device and also reduce the storage space occupied.

Alternatively, in response to the UE already having the first mobility configuration, a deleting message and the second mobility configuration are sent to the UE, in which the deleting message is used for the UE to delete the first mobility configuration that the UE already has.

For example, in response to the UE already having the first mobility configuration, the network device sends the deleting message to the UE, and sends the second mobility configuration to the UE after the UE deletes the first mobility configuration it already has.

For example, in a case where it is determined that the UE already has the first mobility configuration, the deleting message is first sent to the UE, and the UE deletes the first mobility configuration it already has after receiving the deleting message. The network device then sends the second mobility configuration to the UE. After the UE deletes the first mobility configuration it already has, the UE may store the second mobility configuration. Since the deleting message has already been sent to the UE and the UE has already deleted the first mobility configuration, the UE will not have both the first mobility configuration and the second mobility configuration after sending the second mobility configuration to the UE, which reduces the situation that the UE has both the first mobility configuration and the second mobility configuration at any time, and the UE only has one mobility configuration at any time.

For example, in response to the UE already having the first mobility configuration, the network device simultaneously sends the deleting message and the second mobility configuration to the UE. After receiving the deleting message and the second mobility configuration, the UE deletes the first mobility configuration according to the deleting message and then stores the second mobility configuration.

In an embodiment, the first mobility configuration and the second mobility configuration are LTM configurations associated with different types of cell groups or cells of the UE;
and/or
the first mobility configuration and the second mobility configuration are respectively an LTM configuration and an L3 mobility configuration.

For example, if the first mobility configuration is the LTM configuration, the second mobility configuration is the L3 mobility configuration.

For example, if the second mobility configuration is the LTM configuration, the first mobility configuration is the L3 mobility configuration.

For example, if the first mobility configuration is the LTM configuration associated with the MCG or the Pcell of the UE, the second mobility configuration is the LTM configuration associated with the SCG or the PScell of the UE.

For example, if the second mobility configuration is the LTM configuration associated with the MCG or the Pcell of the UE, the first mobility configuration is the LTM configuration associated with the SCG or the PScell of the UE.

For example, the first mobility configuration is the L3 mobility configuration associated with the MCG or the Pcell of the UE, the second mobility configuration is the L3 mobility configuration associated with the SCG or the PScell of the UE.

For example, the first mobility configuration is the L3 mobility configuration associated with the SCG or the PScell of the UE, the second mobility configuration is the L3 mobility configuration associated with the MCG or the Pcell of the UE.

For example, the first mobility configuration is the LTM configuration associated with the MCG or the Pcell of the UE, the second mobility configuration is the L3 mobility configuration associated with the SCG or the PScell of the UE.

For example, the first mobility configuration is the L3 mobility configuration associated with the MCG or the Pcell of the UE, the second mobility configuration is the LTM configuration associated with the SCG or the PScell of the UE.

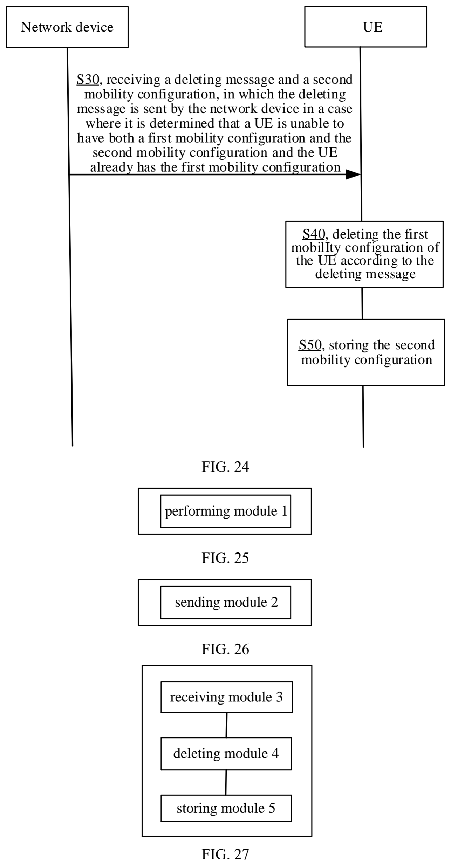

In an embodiment, reference is made to FIG. 24, which is a schematic diagram illustrating another method for processing information. The method is performed by a network device, and includes the following steps.

In step S30, a deleting message and a second mobility configuration are received, in which the deleting message is sent by the network device in a case where it is determined that a UE is unable to have both a first mobility configuration and the second mobility configuration and the UE already has the first mobility configuration.

In step S40, a first mobility configuration of the UE is deleted according to the deleting message.

In step S50, the second mobility configuration is stored.

In a case where the network device determines that the UE already having the first mobility configuration, the network device sends the deleting message to the UE. After receiving the deleting message, the UE deletes the first mobility configuration it already has. The UE may then store the second mobility configuration. Since the UE deletes the first mobility configuration, the UE will not have both the first mobility configuration and the second mobility configuration simultaneously after receiving the second mobility configuration.

In an embodiment, the UE receives the deleting message, deletes the existing first mobility configuration according to the deleting message, and then receives and stores the second mobility configuration. The second mobility configuration is sent to the UE by the network device after the UE deletes the first mobility configuration.

After receiving the deleting message, the UE deletes the existing first mobility configuration. The network device then sends the second mobility configuration to the UE and stores the second mobility configuration. Since the UE deletes the first mobility configuration before receiving the second mobility configuration, and receives the second mobility configuration after deleting the first mobility configuration, the UE will not have both the first mobility configuration and the second mobility configuration at any time after receiving the second mobility configuration.

With the embodiments, the UE may have one mobility configuration at any time, such as the first mobility configuration or the second mobility configuration, and may not have the second mobility configuration in a case where the UE has one mobility configuration, thereby reducing a situation that the UE have both the first mobility configuration and the second mobility configuration at any time.

In an embodiment, the first mobility configuration and the second mobility configuration are LTM configurations associated with different types of cell groups or cells of the UE;
and/or
the first mobility configuration and the second mobility configuration are respectively an LTM configuration and an L3 mobility configuration.

For example, if the first mobility configuration is the LTM configuration, the second mobility configuration is the L3 mobility configuration.

For example, if the second mobility configuration is the LTM configuration, the first mobility configuration is the L3 mobility configuration.

For example, if the first mobility configuration is the LTM configuration associated with the MCG or the Pcell of the UE, the second mobility configuration is the LTM configuration associated with the SCG or the PScell of the UE.

For example, if the second mobility configuration is the LTM configuration associated with the MCG or the Pcell of the UE, the first mobility configuration is the LTM configuration associated with the SCG or the PScell of the UE.

For example, the first mobility configuration is the L3 mobility configuration associated with the MCG or the Pcell of the UE, the second mobility configuration is the L3 mobility configuration associated with the SCG or the PScell of the UE.

For example, the first mobility configuration is the L3 mobility configuration associated with the SCG or the PScell of the UE, the second mobility configuration is the L3 mobility configuration associated with the MCG or the Pcell of the UE.

For example, the first mobility configuration is the LTM configuration associated with the MCG or the Pcell of the UE, the second mobility configuration is the L3 mobility configuration associated with the SCG or the PScell of the UE.

For example, if the first mobility configuration is the L3 mobility configuration associated with the MCG or the Pcell of the UE, the second mobility configuration is the LTM configuration associated with the SCG or the PScell of the UE.

In an embodiment, reference is made to FIG. 25, which is a schematic diagram illustrating an apparatus for processing information. The apparatus includes:
a performing module 1 configured to, in response to performing a first operation associated with a first mobility configuration of a UE, perform a second operation associated with a second mobility configuration of the UE.

In an embodiment, the first operation is a mobility operation; and
the second operation is a deleting operation or a retaining operation.

In an embodiment, the performing module 1 is configured to delete or retain the second mobility configuration in response to performing a mobility operation associated with the first mobility configuration of the UE.

In an embodiment, the UE is configured with multiple mobility configurations; the multiple mobility configurations include an LTM configuration;
or
the multiple mobility configurations include an LTM configuration and an L3 mobility configuration;
   or
the multiple mobility configurations include an L3 mobility configuration.

In an embodiment, the first mobility configuration is the LTM configuration and the second mobility configuration is the L3 mobility configuration;
or
the second mobility configuration is the LTM configuration and the first mobility configuration is the L3 mobility configuration;
   or
the first mobility configuration is an LTM configuration associated with an MCG or a Pcell of the UE, and the second mobility configuration is an LTM configuration associated with an SCG or a PScell of the UE;
   or
the second mobility configuration is an LTM configuration associated with an MCG or a Pcell of the UE, and the first mobility configuration is an LTM configuration associated with an SCG or a PScell of the UE.

In an embodiment, the first mobility configuration and the second mobility configuration are associated with the same type of cell or cell group of the UE;
the first operation includes a mobility operation associated with the first mobility configuration;
the second operation includes deleting or retaining the second mobility configuration; and
a type of cell includes the Pcell and the Scell; and a type of cell group includes the MCG and the SCG.

In an embodiment, the first mobility configuration and the second mobility configuration are associated with different types of cells or cell groups of the UE;
the first operation includes a mobility operation of the Pcell or of the MCG of the UE; and the second operation includes deleting or retaining the second mobility configuration;
   or
the first operation includes a mobility operation of the Scell or of the SCG of the UE, and the second operation includes deleting or retaining the second mobility configuration; and
a type of cell includes the Pcell and the Scell; and a type of cell group includes the MCG and the SCG.

In an embodiment, the first mobility configuration is the L3 mobility configuration of the Pcell or of the MCG of the UE;
the first operation includes a mobility operation of the Pcell or of the MCG of the UE;
the second mobility configuration is the LTM configuration of the Pcell or of the MCG of the UE; and
the second operation includes deleting the second mobility configuration.

In an embodiment, the first mobility configuration is the LTM configuration of the Pcell or of the MCG of the UE;
the first operation includes a mobility operation of the Pcell or of the MCG of the UE;
the second mobility configuration is the L3 mobility configuration of the Pcell or of the MCG of the UE; and
the second operation includes deleting or retaining the second mobility configuration.

In an embodiment, the first mobility configuration is the L3 mobility configuration of the PScell or the SCG including the PScell of the UE;
the first operation includes a mobility operation of the PScell or of the SCG of the UE;
the second mobility configuration is the LTM configuration of the PScell or of the SCG of the UE; and
the second operation includes deleting the second mobility configuration.

In an embodiment, the first mobility configuration is a configuration of activation or deactivation of the Scell or of the SCG of the UE;
the first operation includes the activation or the deactivation of the Scell or of the SCG of the UE;
the second mobility configuration is the LTM configuration of the PScell or of the SCG including the PScell of the UE; and
the second operation includes retaining the second mobility configuration.

In an embodiment, the first mobility configuration is the LTM configuration of the PScell or of the SCG including the PScell of the UE;
the first operation includes a mobility operation of the PScell or of the SCG of the UE;
the second mobility configuration is the L3 mobility configuration of the PScell or of the SCG including the PScell of the UE; and
the second operation includes deleting or retaining the second mobility configuration.

In an embodiment, the first mobility configuration is the LTM configuration of the Pcell or of the MCG of the UE;
the first operation includes a change or addition operation of the PScell or of the SCG including the PScell of the UE;
the second mobility configuration is the LTM configuration of the Pcell or of the MCG of the UE; and
the second operation includes retaining the second mobility configuration.

In an embodiment, the first mobility configuration is the LTM configuration of the Pcell or of the MCG of the UE;
the first operation includes activation or deactivation of the SCG or of the SCG including the PScell of the UE;
the second mobility configuration is the LTM configuration of the Pcell or of the MCG of the UE; and
the second operation includes retaining the second mobility configuration.

In an embodiment, the first mobility configuration is the LTM configuration of the Pcell or of the MCG of the UE;
the first operation includes the mobility operation of the Pcell or of the MCG of the UE;
the second mobility configuration is a mobility configuration for change or addition of the PScell or of the SCG including the PScell of the UE; and
the second operation includes deleting or retaining the second mobility configuration.

In an embodiment, the first mobility configuration is the L3 mobility configuration of the Pcell of the UE;
the first operation includes the mobility operation of the Pcell of the UE;
the second mobility configuration is the LTM configuration of the PScell or a SCG including the PScell of the UE; and
the second operation includes: deleting or retaining the second mobility configuration.

In an embodiment, the first mobility configuration is the LTM configuration of the PScell or of the SCG including the PScell of the UE;
the first operation includes the mobility operation of the PScell or of the SCG of the UE;
the second mobility configuration is the L3 mobility configuration of the Pcell or of the MCG of the UE; and
the second operation includes retaining the second mobility configuration.

In an embodiment, reference is made to FIG. 26, which is a schematic diagram illustrating an apparatus for processing information. The apparatus includes:
a sending module 2 configured to, in response to a UE being unable to have both a first mobility configuration and a second mobility configuration, send one of the first mobility configuration and the second mobility configuration to the UE.

In an embodiment, the apparatus further includes:
a determining module is configured to determine, based on a protocol agreement or a configuration policy of the network device, whether the UE is able to have both the first mobility configuration and the second mobility configuration.

In an embodiment, the sending module 2 is configured to send the second mobility configuration to the UE in response to the UE not having the first mobility configuration.

In an embodiment, the sending module 2 is configured to prohibit sending the second mobility configuration to the UE in response to the UE already having the first mobility configuration;
or
the sending module 2 is configured to send a deleting message and the second mobility configuration to the UE in response to the UE already having the first mobility configuration, in which the deleting message is used for the UE to delete the first mobility configuration that the UE already has.

In an embodiment, the first mobility configuration and the second mobility configuration are LTM configurations associated with different types of cell groups or cells of the UE;
and/or
the first mobility configuration and the second mobility configuration are respectively an LTM configuration and an L3 mobility configuration.

In an embodiment, the first mobility configuration is the LTM configuration and the second mobility configuration is the L3 mobility configuration;
or
the second mobility configuration is the LTM configuration and the first mobility configuration is the L3 mobility configuration;
   or
the first mobility configuration is an LTM configuration associated with an MCG or a Pcell of the UE, and the second mobility configuration is an LTM configuration associated with an SCG or a PScell of the UE;
   or
the second mobility configuration is an LTM configuration associated with an MCG or a Pcell of the UE, and the first mobility configuration is an LTM configuration associated with an SCG or a PScell of the UE.

In an embodiment, reference is made to FIG. 27, which is a schematic diagram illustrating an apparatus for processing information. The apparatus includes:
a receiving module 3 configured to receive a deleting message and a second mobility configuration, in which the deleting message is sent by a network device in a case where it is determined that a UE is unable to have both a first mobility configuration and the second mobility configuration and the UE already has the first mobility configuration;
a deleting module 4 configured to, according to the delete message, delete the first mobility configuration of the UE ; and
a storing module 5 configured to store the second mobility configuration.

In an embodiment, the first mobility configuration and the second mobility configuration are LTM configurations associated with different types of cell groups or cells of the UE;
and/or
the first mobility configuration and the second mobility configuration are respectively an LTM configuration and an L3 mobility configuration.

In an embodiment, the first mobility configuration is the LTM configuration and the second mobility configuration is the L3 mobility configuration;
or
the second mobility configuration is the LTM configuration and the first mobility configuration is the L3 mobility configuration;
   or
the first mobility configuration is an LTM configuration associated with an MCG or a Pcell of the UE, and the second mobility configuration is an LTM configuration associated with an SCG or a PScell of the UE;
   or
the second mobility configuration is an LTM configuration associated with an MCG or a Pcell of the UE, and the first mobility configuration is an LTM configuration associated with an SCG or a PScell of the UE.

In an embodiment, there is also provided a communication device, including a processor, a transceiver, a memory and an executable program stored in the memory and executable by the processor, in which the processor, when running the executable program, performs the method for processing information as provided in any of the above embodiments.

In an embodiment, there is also provided a computer storage medium storing an executable program, in which the executable program, when executed by a processor, causes the processor to implement the method for processing information provided in any of the above embodiments.

In an embodiment, the present disclosure proposes a method for processing information, including a method for processing a mobility, which, in a case where both the LTM configuration and the L3 mobility configuration are configured simultaneously, determines a behavior of the UE after triggering a first operation associated with the L3 mobility configuration, and a behavior of the UE after triggering a first operation associated with the LTM configuration.

Solution 1: if the UE is configured with multiple mobility configurations simultaneously, when the UE triggers a mobility operation associated with one of the mobility configurations, the other mobility configurations stored by the UE are deleted or retained.

Solution 2: the protocol stipulates that LTM configuration and other mobility configurations may not be configured simultaneously.

In an embodiment, in response to the UE being configured with mobility configurations corresponding to multiple mobility operations (i.e., receiving the mobility configurations of the multiple mobility operations), and in response to the UE triggering a mobility operation associated with one of the mobility configurations, the UE deletes or retains the other mobility configurations.

The mobility configuration may include the LTM configuration, which is used to change the PCell or PSCell.

The LTM configuration includes: an LTM configuration for the PCell, an LTM configuration for the MCG, an LTM configuration for the PSCell, and/or an LTM configuration for the SCG.

The mobility configuration may also include one or more of L3 mobility configurations, in which a configuration changed of the PCell includes: a conventional handover command of the Pcell, a CHO configuration, a configuration for cell group selective activation of the MCG or the PCell. The configuration for change or addition of the PSCell includes: a configuration for change or addition of the PSCell directly triggered based on an RRC signaling, a configuration of CPA, a configuration of CPC, an activation and deactivation configuration of the SCG, and a configuration for cell group selective activation of the SCG or of the PSCell.

In an embodiment, in a case where mobility configurations for change of both a group of cells of the same type (e.g., both for the MCG or the SCG) are configured simultaneously, when a mobility operation associated with one of the mobility configurations is triggered, the mobility configuration corresponding to the other mobility operation may be selected to be retained or deleted. For example, the LTM configuration and the L3 mobility configuration are configured simultaneously, and if the L3 mobility configuration is triggered, the LTM configuration is deleted; and if the LTM configuration is triggered, the L3 mobility configuration may be retained or deleted.

For example, after the UE completes the mobility operation associated with the first mobility configuration, the UE deletes the second mobility configuration, that is, after successfully accessing the target cell associated with the first mobility configuration, the second mobility configuration is deleted.

In an embodiment, in a case where the mobility configurations for change of different types of cell groups (e.g., both for the MCG or the SCG) are configured simultaneously, if the mobility configuration for the MCG is triggered, all mobility configurations for the SCG are retained or deleted. If the triggered mobility configuration is a mobility configuration for change of the SCG, all mobility configurations for the MCG are retained. For example, the LTM configuration for the MCG or the L3 mobility configuration for the MCG and the L3 mobility configuration for the SCG or the LTM configuration for the SCG are configured simultaneously, and if a mobility operation associated with the L3 mobility configuration for the SCG or the mobility operation associated with the LTM configuration for the SCG is triggered, at least the LTM configuration for the MCG is retained. If a mobility operation associated with the LTM configuration of the MCG or the L3 mobility configuration associated with the MCG is triggered, the LTM configuration for the L3 mobility configuration and the LTM configuration for the SCG may be retained or deleted.

In an embodiment, in a case where the UE is configured with the LTM configuration for the PCell, if the UE performs a PCell change triggered by a non-LTM configuration, the LTM configuration is deleted. The configuration for the UE to perform the PCell change may include a conventional handover command, a CHO configuration, or a configuration for cell group selective activation of the MCG or the PCell. In a case where the conventional handover command, the CHO configuration, or the configuration for cell group selective activation of the MCG or the PCell is triggered, the UE performs the PCell change.

For example, in a case where the UE is configured with LTM, the UE receives an RRC signaling carrying a handover command sent by the network device, and the UE performs the handover and deletes the LTM configuration stored by the UE.

For example, in a case where the UE is configured with both the LTM and the CHO, the UE meets a trigger condition of CHO configuration and triggers an execution condition corresponding to the CHO, and the UE performs a cell handover corresponding to the CHO configuration and deletes the LTM configuration stored by the UE.

For example, in a case where the UE is configured with LTM configuration and a cell group selective activation configuration, the UE meets a condition for cell group selective activation, triggers the cell group selective activation, performs the cell group selective activation, and deletes the LTM configuration stored by the UE.

In an embodiment, in a case where the UE is configured with the LTM configuration for the PCell and other mobility configurations for the PCell change, if the UE successfully performs the LTM configuration, the other mobility configurations for the mobility operation for the PCell change are deleted or retained. Other mobility configurations for the mobility operation for the PCell change include one or more of the CHO configuration and the configuration of the cell group selective activation for the MCG or the PCell.

For example, in a case where the UE is configured with both the LTM configuration and the CHO configuration, the UE receives an L2 message for triggering the LTM configuration, and the UE triggers the LTM configuration and deletes the CHO configuration stored by the UE.

For example, in a case where the UE is configured with the LTM configuration and the cell group selective activation, the UE receives the L2 message for triggering the LTM configuration, and the UE triggers the LTM configuration and retains the cell group selective activation configuration stored by the UE.

For example, in a case where the UE is configured with the LTM configuration and the cell group selective activation, the UE receives the L2 message for triggering the LTM configuration, and the UE triggers the LTM configuration and deletes the cell group selective activation configuration stored by the UE.

In an embodiment, in a case where the UE is configured with the LTM configuration for the PCell, the LTM configuration for the PCell is still retained if the UE performs a PSCell change or addition. The UE performs the PSCell change, which may be directly triggered by the RRC signaling to change or add the PSCell, which may be triggered by the CPC, the CPA, the LTM configuration for the PSCell or the cell group selective activation for the SCG or the PSCell.

In an embodiment, in a case where the UE is configured with the LTM configuration for the PCell, the LTM configuration for the PCell is still retained if the UE performs SCG activation or deactivation.

In an embodiment, in a case where the UE is configured with the LTM configuration for the PCell and the mobility configuration for the mobility operation of the PCell change or addition, after the LTM configuration corresponding to the PCell is triggered, the mobility configuration for the mobility operation of the PCell change or addition is retained or deleted, in which the mobility configuration for the UE to perform the PCell change includes the configuration of CPC, the configuration of CPA, the LTM configuration for the PCell or the configuration for the SCG or cell group selective activation of the PCell.

In an embodiment, in a case where the UE is configured with the LTM configuration for the PSCell, if the UE performs the PSCell change triggered by the non-LTM configuration, the LTM configuration is deleted. The configuration for the UE to perform the PSCell change may include the RRC signaling, the configuration of CPC, the configuration of CPA, or the configuration for cell group selective activation of the SCG or of the PSCell.

For example, in a case where the UE is configured with the LTM configuration, the UE receives the RRC signaling sent by the network side to trigger the PSCell change, and performs the PSCell change and deletes the LTM configuration stored by the UE.

For example, in a case where the UE is configured with the LTM configuration, the CPC, or the CPA, the UE meets a triggering condition of the CPC or the CPA, triggers the CPC or the CPA, and performs the CPC or the CPA and deletes the LTM configuration stored by the UE.

For example, in a case where the UE is configured with the LTM configuration and the cell group selective activation, the UE meets a condition for the cell group selective activation, triggers the cell group selective activation, performs the cell group selective activation, and deletes the LTM configuration stored by the UE.

In an embodiment, in a case where the UE is configured with the LTM configuration for the PSCell, the LTM configuration is retained if the UE performs activation or deactivation of the SCG.

In an embodiment, in a case where the UE is configured with the LTM configuration for the PSCell and other mobility operations for the PSCell change, if the UE successfully performs the LTM configuration for the PSCell, the other configurations of the mobility operation for the PSCell change are deleted or retained. Other mobility configurations of the mobility operation for the PSCell change include one or more of the configuration of CPC, the configuration of CPA, and the configuration for cell group selective activation of SCG or PSCell.

For example, in a case where the UE is configured with the LTM configuration, the configuration of CPC or the configuration of CPA, the UE receives the L2 message for triggering the LTM, triggers the LTM configuration and deletes the configuration of CPC or the configuration of CPA stored by the UE.

For example, in a case where the UE is configured with the LTM configuration and the cell group selective activation, the UE receives the L2 message for triggering the LTM configuration, triggers the LTM configuration and retains the configuration for cell group selective activation stored by the UE.

For example, in a case where the UE is configured with the LTM configuration and the cell group selective activation, the UE receives the L2 message for triggering the LTM configuration, triggers the LTM configuration and deletes the configuration for cell group selective activation stored by the UE.

In an embodiment, in a case where the UE is configured with the LTM configuration for the PSCell, if the UE performs the PCell change, the LTM configuration for the PSCell is deleted or retained. The configuration for the UE to perform the PCell change may include the handover command, the configuration of CHO, the LTM configuration for the PCell, or the configuration for the cell group selective activation of the MCG or of the PCell.

In an embodiment, in a case where the UE is configured with the LTM configuration for the PSCell and the configuration of mobility operation for the PCell change, the mobility configuration of mobility operation for the PCell change is retained after the LTM configuration corresponding to the PSCell is triggered. The mobility configuration for the UE to perform the of the PCell change may include the configuration of CHO, the LTM configuration for the PCell, or the configuration for the cell group selective activation of the MCG or of the PCell.

In an embodiment, the protocol stipulates that the LTM may not be configured simultaneously with other mobility configurations.

The protocol stipulates that the LTM may not be configured simultaneously with other mobility configurations, including:

LTM configurations for different types of cell groups may not be configured simultaneously, and LTM configurations may not be configured simultaneously with the L3 mobility configuration.

In an embodiment, the protocol stipulates that the UE does not support simultaneous configuration of the LTM configuration for the MCG and the LTM configuration for the SCG.

If the network device has already configured the LTM configuration for the MCG for the UE, it does not support configuring the LTM configuration for the SCG for the UE.

In an embodiment, the protocol stipulates that the LTM configuration and the L3 mobility configuration are not supported simultaneously.

If the network device has already configured the LTM configuration for the UE, it does not support reconfiguring one or more of the handover command, a message for adding or changing the PSCell, the configuration of CHO, the configuration of CPA, the configuration of CPC, the configuration of cell group selective activation, and the configuration of SCG activation/deactivation for the UE.

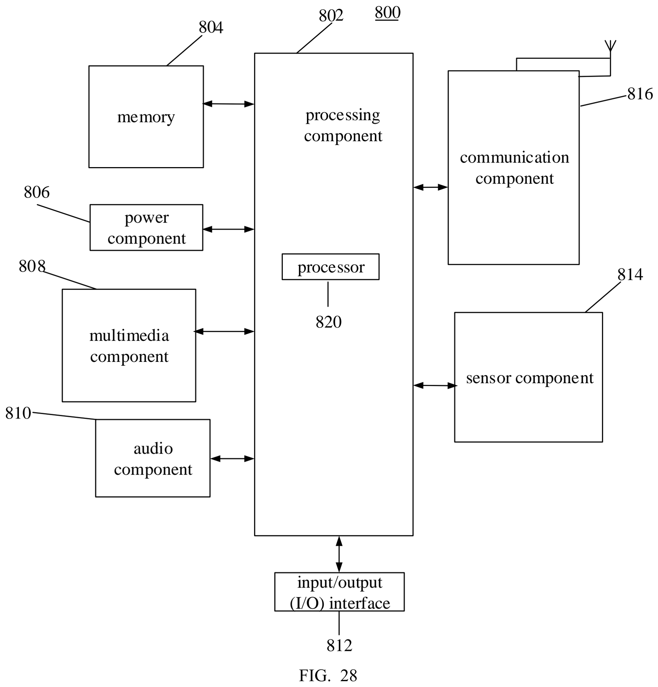

FIG. 28 is a block diagram illustrating a UE 800 according to an illustrative embodiment. For example, the UE 800 may be a mobile phone, a computer, a digital broadcast terminal, a messaging device, a game console, a tablet device, a medical device, a fitness device, a personal digital assistant, or the like.

Referring to FIG. 28, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, phone calls, data communications, camera operations, and recording operations. The processing component 802 may include one or more processors 820 to execute instructions to perform all or some of the steps in the above-described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the UE 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as keyboards, click wheels, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in location of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, wired or wireless, between the UE 800 and other devices. The UE 800 may access a wireless network based on a communication standard, such as Wi-Fi, 2G, or 3G, or a combination thereof. In an illustrative embodiment, the communication component 816 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the UE 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned methods.

In an illustrative embodiment, there is also provided a non-transitory computer readable storage medium including instructions, such as included in the memory 804, executable by the processor 820 in the UE 800, for completing the above-mentioned methods. For example, the non-transitory computer-readable storage medium may be a ROM, a random access memory (RAM), a CD-ROM, a magnetic tape, a floppy disc, an optical data storage device, and the like.

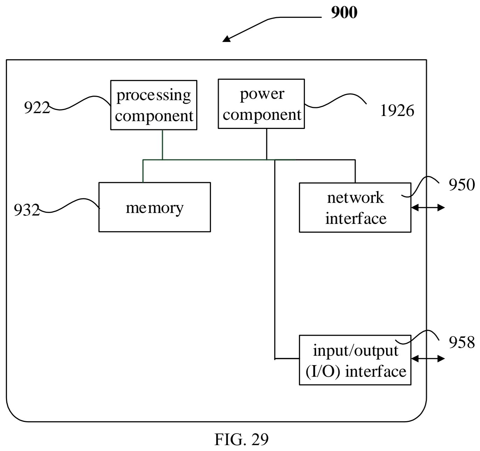

As shown in FIG. 29, embodiments of the present disclosure show a structure of an access device. For example, the communication device 900 may be provided as a network side device. The communication device may be various network elements such as the aforementioned access network element and/or network function.

Referring to FIG. 29, the communication device 900 includes a processing component 922 and a memory resource represented by a memory 932. The processing component 922 may further include one or more processors. The memory 932 is configured to store instructions executable by the processing component 922, such as an application program. The application program stored in the memory 932 may include one or more modules each corresponding to a set of instructions. In addition, the processing component 922 is configured to execute the instructions to perform any of the aforementioned methods applied to the access device, for example, any of the methods shown in any of FIGS. 4 to 9.

The communication device 900 further includes a power component 926 configured to perform a power management on the communication device 900, a wired or wireless network interface 950 configured to connect the communication device 900 to the network, and an input/output (I/O) interface 958. The communication device 900 may operate an operating system stored in the memory 932, such as Windows Server^{™}, Mac OS X^{™}, Unix^{™}, Linux^{™}, Free BSD^{™}, or the like.

Other embodiments of the present disclosure will be apparent to those skilled in the art from consideration of the specification and practice of the present disclosure disclosed here. The present disclosure is intended to cover any variations, uses, or adaptations of the embodiments of the present disclosure following the general principles thereof and including common knowledge or conventional technical means known in the art but not disclosed in the present disclosure. The specification and examples should be considered as illustrative only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A method for processing information, performed by a user equipment (UE), comprising:
in response to performing a first operation associated with a first mobility configuration of the UE, performing a second operation associated with a second mobility configuration of the UE.

2. The method of claim 1, wherein the first operation is a mobility operation; and
the second operation is a deleting operation or a retaining operation.

3. The method of claim 1, wherein in response to performing a mobility operation associated with the first mobility configuration of the UE, performing an operation related to saving the second mobility configuration of the UE comprises:
in response to performing a mobility operation associated with the first mobility configuration of the UE, deleting or retaining the second mobility configuration.

4. The method of claim 1, wherein the UE is configured with a plurality of mobility configurations;
the plurality of mobility configurations comprise a layer 1 or layer 2-triggered mobility (LTM) configuration;
or
the plurality of mobility configurations comprise an LTM configuration and an L3 mobility configuration;
or
the plurality of mobility configurations comprise a layer 3 (L3) mobility configuration.

5. The method of claim 4, wherein
the first mobility configuration is the LTM configuration and the second mobility configuration is the L3 mobility configuration;
or
the second mobility configuration is the LTM configuration and the first mobility configuration is the L3 mobility configuration;
or
the first mobility configuration is an LTM configuration associated with a master cell group or a primary cell of the UE, and the second mobility configuration is an LTM configuration associated with a secondary cell group or a primary secondary cell of the UE;
or
the second mobility configuration is an LTM configuration associated with a master cell group or a primary cell of the UE, and the first mobility configuration is an LTM configuration associated with a secondary cell group or a primary secondary cell of the UE.

6. The method of claim 4 or 5, wherein
the first mobility configuration and the second mobility configuration are associated with the same type of cell or cell group of the UE;
the first operation comprises a mobility operation associated with the first mobility configuration;
the second operation comprises deleting or retaining the second mobility configuration; and
a type of cell comprises a primary cell and a secondary cell; and a type of cell group comprises a master cell group and a secondary cell group.

7. The method of claim 4 or 5, wherein
the first mobility configuration and the second mobility configuration are associated with different types of cells or cell groups of the UE;
the first operation comprises a mobility operation of a primary cell or of a master cell group of the UE; and the second operation comprises deleting or retaining the second mobility configuration;
or
the first operation comprises a mobility operation of a secondary cell or of a secondary cell group of the UE, and the second operation comprises deleting or retaining the second mobility configuration; and
a type of cell comprises a primary cell and a secondary cell; and a type of cell group comprises a master cell group and a secondary cell group.

8. The method of claim 6, wherein
the first mobility configuration is the L3 mobility configuration of the primary cell or of the master cell group of the UE;
the first operation comprises a mobility operation of the primary cell or of the master cell group of the UE;
the second mobility configuration is the LTM configuration of the primary cell or of the master cell group of the UE; and
the second operation comprises deleting the second mobility configuration.

9. The method of claim 6, wherein
the first mobility configuration is the LTM configuration of the primary cell or of the master cell group of the UE;
the first operation comprises a mobility operation of the primary cell or of the master cell group of the UE;
the second mobility configuration is the L3 mobility configuration of the primary cell or of the master cell group of the UE; and
the second operation comprises deleting or retaining the second mobility configuration.

10. That method of claim 6, wherein
the first mobility configuration is the L3 mobility configuration of the primary secondary cell or the secondary cell group comprising the primary secondary cell of the UE;
the first operation comprises a mobility operation of the primary secondary cell or of the secondary cell group of the UE;
the second mobility configuration is the LTM configuration of the primary secondary cell or of the secondary cell group of the UE; and
the second operation comprises deleting the second mobility configuration.

11. The method of claim 6, wherein
the first mobility configuration is a configuration of activation or deactivation of the secondary cell or of the secondary cell group of the UE;
the first operation comprises the activation or the deactivation of the secondary cell or of the secondary cell group of the UE;
the second mobility configuration is the LTM configuration of the primary secondary cell or of the secondary cell group comprising the primary secondary cell of the UE; and
the second operation comprises retaining the second mobility configuration.

12. The method of claim 6, wherein
the first mobility configuration is the LTM configuration of the primary secondary cell or of the secondary cell group comprising the primary secondary cell of the UE;
the first operation comprises a mobility operation of the primary secondary cell or of the secondary cell group of the UE;
the second mobility configuration is the L3 mobility configuration of the primary secondary cell or of the secondary cell group comprising the primary secondary cell of the UE; and
the second operation comprises deleting or retaining the second mobility configuration.

13. The method of claim 7, wherein
the first mobility configuration is the LTM configuration of the primary cell or of the master cell group of the UE;
the first operation comprises a change or addition operation of the primary secondary cell or of the secondary cell group comprising the primary secondary cell of the UE;
the second mobility configuration is the LTM configuration of the primary cell or of the master cell group of the UE; and
the second operation comprises retaining the second mobility configuration.

14. That method of claim 7, wherein
the first mobility configuration is the LTM configuration of the primary cell or of the master cell group of the UE;
the first operation comprises activation or deactivation of the secondary cell group or of the secondary cell group comprising the primary secondary cell of the UE;
the second mobility configuration is the LTM configuration of the primary cell or of the master cell group of the UE; and
the second operation comprises retaining the second mobility configuration.

15. That method of claim 7, wherein
the first mobility configuration is the LTM configuration of the primary cell or of the master cell group of the UE;
the first operation comprises the mobility operation of the primary cell or of the master cell group of the UE;
the second mobility configuration is a mobility configuration changed or added of the primary secondary cell or of the secondary cell group comprising the primary secondary cell of the UE; and
the second operation comprises deleting or retaining the second mobility configuration.

16. The method of claim 7, wherein
the first mobility configuration is the L3 mobility configuration of the primary cell of the UE;
the first operation comprises the mobility operation of the primary cell of the UE;
the second mobility configuration is the LTM configuration of the primary secondary cell or a secondary cell group comprising the primary secondary cell of the UE; and
the second operation comprises: deleting or retaining the second mobility configuration.

17. The method of claim 7, wherein
the first mobility configuration is the LTM configuration of the primary secondary cell or of the secondary cell group comprising the primary secondary cell of the UE;
the first operation comprises the mobility operation of the primary secondary cell or of the secondary cell group of the UE;
the second mobility configuration is the L3 mobility configuration of the primary cell or of the master cell group of the UE; and
the second operation comprises retaining the second mobility configuration.

18. A method for processing information, performed by a network device, comprising:
in response to a user equipment (UE) being unable to have both a first mobility configuration and a second mobility configuration, sending one of the first mobility configuration and the second mobility configuration to the UE.

19. The method of claim 18, further comprising:
determining, according to a protocol agreement or a configuration policy of the network device, whether the UE is able to have both the first mobility configuration and the second mobility configuration.

20. The method of claim 18, wherein in response to the UE being unable to have both the first mobility configuration and the second mobility configuration, sending one of the first mobility configuration and the second mobility configuration to the UE comprises:
in response to the UE not having the first mobility configuration, sending the second mobility configuration to the UE.

21. The method of claim 18, further comprising:
in response to the UE already having the first mobility configuration, prohibiting sending the second mobility configuration to the UE;
or
in response to the UE already having the first mobility configuration, sending a deleting message and the second mobility configuration to the UE, wherein the deleting message is used for the UE to delete the first mobility configuration that the UE already has.

22. The method of claim 18, wherein
the first mobility configuration and the second mobility configuration are layer 1 or layer 2 - triggered mobility (LTM) configurations associated with different types of cell groups or cells of the UE;
and/or
the first mobility configuration and the second mobility configuration are respectively an LTM configuration and a layer 3 (L3) mobility configuration.

23. The method of claim 22, wherein the first mobility configuration is the LTM configuration and the second mobility configuration is the L3 mobility configuration;
or
the second mobility configuration is the LTM configuration and the first mobility configuration is the L3 mobility configuration;
or
the first mobility configuration is an LTM configuration associated with a master cell group or a primary cell of the UE, and the second mobility configuration is an LTM configuration associated with a secondary cell group or a primary secondary cell of the UE;
or
the second mobility configuration is an LTM configuration associated with a master cell group or a primary cell of the UE, and the first mobility configuration is an LTM configuration associated with a secondary cell group or a primary secondary cell of the UE.

24. A method for processing information, performed by a user equipment (UE), comprising:
receiving a deleting message and a second mobility configuration, wherein the deleting message is sent by a network device in a case where it is determined that the UE is unable to have both a first mobility configuration and the second mobility configuration and the UE already has the first mobility configuration;
deleting, according to the deleting message, a first mobile information configuration of the UE; and
storing the second mobility configuration.

25. The method of claim 24, wherein
the first mobility configuration and the second mobility configuration are layer 1 or layer 2 - triggered mobility (LTM) configurations associated with different types of cell groups or cells of the UE;
and/or
the first mobility configuration and the second mobility configuration are respectively an LTM configuration and a layer 3 (L3) mobility configuration.

26. The method of claim 24, wherein the first mobility configuration is the LTM configuration and the second mobility configuration is the L3 mobility configuration;
or
the second mobility configuration is the LTM configuration and the first mobility configuration is the L3 mobility configuration;
or
the first mobility configuration is an LTM configuration associated with a master cell group or a primary cell of the UE, and the second mobility configuration is an LTM configuration associated with a secondary cell group or a primary secondary cell of the UE;
or
the second mobility configuration is an LTM configuration associated with a master cell group or a primary cell of the UE, and the first mobility configuration is an LTM configuration associated with a secondary cell group or a primary secondary cell of the UE.

27. An apparatus for processing information, comprising:
a performing module configured to, in response to performing a first operation associated with a first mobility configuration of a user equipment (UE), perform a second operation associated with a second mobility configuration of the UE.

28. An apparatus for processing information, comprising:
a sending module configured to, in response to a user equipment (UE) being unable to have both a first mobility configuration and a second mobility configuration, send one of the first mobility configuration and the second mobility configuration to the UE.

29. An apparatus for processing information, comprising:
a receiving module configured to receive a deleting message and a second mobility configuration, wherein the deleting message is sent by a network device in a case where it is determined that a user equipment (UE) is unable to have both a first mobility configuration and the second mobility configuration and the UE already has the first mobility configuration;
a deleting module configured to, according to the deleting message, delete a first mobile information configuration of the UE and
a storing module configured to store the second mobility configuration.

30. A communication device, comprising a processor, a transceiver, a memory and an executable program stored in the memory and executable by the processor, wherein the processor, when running the executable program, performs the method for processing information of any one of claims 1 to 17, 18 to 23 and 24 to 26.

31. A computer storage medium storing an executable program, wherein the executable program, when executed by a processor, causes the processor to implement the method for processing information of any one of claims 1 to 17, 18 to 23 and 24 to 26.
